# EUROPEAN PATENT APPLICATION

(11) **EP 4 700 539 A1**
(43) Date of publication of application: **25.02.2026**
(21) Application number: 25735433.2
(22) Date of filing: 10.07.2025
(51) Int. Cl.: G06F 1/16, C09J 9/00

(54) **ELECTRONIC DEVICE INCLUDING REAR PLATE**

(30) Priority: 10.07.2024 KR 20240091083; 11.09.2024 KR 20240124146
(71) Applicant: Samsung Electronics Co., Ltd, Suwon-si, Gyeonggi-do 16677 (KR)
(72) Inventor: JUNG, Youngduck, Suwon-si, Gyeonggi-do 16677 (KR); JUNG, Bohyun, Suwon-si, Gyeonggi-do 16677 (KR)
(74) Representative: Walaski, Jan Filip
(86) International application number: PCT/KR2025/010075
(87) International publication number: WO 2026/014949

(57) **Abstract**

According to an embodiment of the disclosure, an electronic device may be provided. The electronic device may comprise a housing including a support structure, and a rear plate, disposed to face at least a portion of the support structure with a first gap interposed therebetween, the support structure including a first hole and a second hole formed around the first hole and connected to a first space within the housing, a socket configured to be disposed to close the first hole and the second hole and at least partially accommodated in the housing, an adhesive member coupled to the rear plate and the support structure, and including a first adhesive member and a second adhesive member disposed in different sections of the first gap, and a handle coupled to the first adhesive member and accommodated in the first space in a folded state where the handle is folded at least once.

## Description

### [Technical Field]

The disclosure relates to an electronic device including a rear plate.

### [Background Art]

With the development of information and communication technology and semiconductor technology, various functions are packed in one portable electronic device. For example, an electronic device may implement not only communication functions but also entertainment functions, such as playing games, multimedia functions, such as playing music and videos, communication and security functions for mobile banking, and scheduling or e-wallet functions. These electronic devices have been downsized to be conveniently carried by users.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment of the disclosure, an electronic device may be provided. The electronic device may comprise a housing including a support structure, and a rear plate, disposed to face at least a portion of the support structure with a first gap interposed therebetween, the support structure including a first hole and a second hole formed around the first hole and connected to a first space within the housing, a socket configured to be disposed to close the first hole and the second hole and at least partially accommodated in the housing, an adhesive member coupled to the rear plate and the support structure, and including a first adhesive member and a second adhesive member disposed in different sections of the first gap, and a handle coupled to the first adhesive member and accommodated in the first space in a folded state where the handle is folded at least once.

According to an embodiment of the disclosure, an electronic device may be provided. The electronic device may comprise a housing including a support structure, and a rear plate, disposed to face at least a portion of the support structure with a first gap interposed therebetween, the support structure including a first hole and a second hole formed around the first hole and connected to a first space within the housing, a socket configured to be disposed to close the first hole and the second hole and at least partially accommodated in the housing, an adhesive member coupled to the rear plate and the support structure, and including a first adhesive member and a second adhesive member disposed in different sections of the first gap, and a handle coupled to the first adhesive member and accommodated in the first space in a folded state where the handle is folded at least once. The first adhesive member may include a first coupling structure, and the second adhesive member includes a second coupling structure configured to engage with the first coupling structure and spaced by a specified distance apart from the first coupling structure.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a front perspective view illustrating an electronic device according to an embodiment of the disclosure;
FIG. 3 is a rear perspective view illustrating an electronic device according to an embodiment of the disclosure;
FIG. 4 is a front exploded perspective view illustrating an electronic device according to an embodiment of the disclosure;
FIG. 5 is a rear exploded perspective view illustrating an electronic device according to an embodiment of the disclosure;
FIG. 6 is an exploded perspective view illustrating a partial configuration of an electronic device according to an embodiment of the disclosure;
FIG. 7 is an exploded perspective view illustrating a partial configuration of an electronic device according to an embodiment of the disclosure;
FIG. 8A is a rear view illustrating an electronic device according to an embodiment of the disclosure;
FIG. 8B is a side cross-sectional view taken along line A-A of FIG. 8A according to an embodiment of the disclosure;
FIG. 8C is a cross-sectional perspective view taken along line A-A' of FIG. 8A according to an embodiment of the disclosure;
FIG. 8D is a view illustrating a first hole, a second hole, a first space, and a guide pin of a support structure according to an embodiment of the disclosure;
FIG. 9A is a front view illustrating a rear plate and an adhesive member of an electronic device according to an embodiment of the disclosure;
FIG. 9B is an exploded perspective view illustrating a rear plate and a removal structure of an electronic device according to an embodiment of the disclosure;
FIG. 10 is an enlarged view illustrating an adhesive member disposed on a rear plate according to an embodiment of the disclosure;
FIG. 11 is a plan view illustrating a handle according to an embodiment of the disclosure;
FIG. 12A is a view illustrating a state in which a socket is partially inserted into a support structure of an electronic device according to an embodiment of the disclosure;
FIG. 12B is a view illustrating a state in which a socket is removed from an electronic device according to an embodiment of the disclosure;
FIG. 12C is a view illustrating a state in which a handle of an electronic device is unfolded, according to an embodiment of the disclosure;
FIG. 12D is a view illustrating a state in which a handle and a first adhesive member are withdrawn from a support structure according to an embodiment of the disclosure;
FIG. 12E is a view illustrating a state in which a rear plate of an electronic device is separated from a support structure according to an embodiment of the disclosure;
FIG. 13A is an exploded view illustrating a handle and a first adhesive member according to an embodiment of the disclosure;
FIG. 13B is an exploded view illustrating a first release sheet and a second release sheet with respect to a handle, a first adhesive member, and a second adhesive member according to an embodiment of the disclosure;
FIG. 13C is an exploded view illustrating a separation structure and a rear plate according to an embodiment of the disclosure;
FIG. 13D is a perspective view illustrating a state in which a separation structure is coupled to a rear plate according to an embodiment of the disclosure;
FIG. 14A is a view illustrating a folding structure of a handle having a separation structure according to an embodiment of the disclosure;
FIG. 14B is a view illustrating a structure in which a handle in a folded state is disposed in a first space of a support structure according to an embodiment of the disclosure;
FIG. 14C is a view illustrating a structure in which a handle in a folded state is disposed in a first space of a support structure according to an embodiment of the disclosure;
FIG. 15 may illustrate a state in which a separation structure is coupled to a support structure for recoupling of a rear plate according to an embodiment of the disclosure;
FIG. 16A is a rear perspective view illustrating an electronic device according to an embodiment of the disclosure;
FIG. 16B is a partial side cross-sectional view illustrating an electronic device according to an embodiment of the disclosure;
FIG. 17A is a partial side cross-sectional view illustrating an electronic device according to an embodiment of the disclosure;
FIG. 17B is a partial side cross-sectional view illustrating an electronic device according to an embodiment of the disclosure;
FIG. 18A is a partial side cross-sectional view illustrating an electronic device according to an embodiment of the disclosure;
FIG. 18B is an exploded perspective view illustrating some components of an electronic device according to an embodiment of the disclosure;
FIG. 18C is a plan view illustrating a handle according to an embodiment of the disclosure;
FIG. 18D is a view illustrating the handle of FIG. 18C according to an embodiment of the disclosure as viewed from the opposite side;
FIG. 19A is a partial side cross-sectional view illustrating an electronic device according to an embodiment of the disclosure;
FIG. 19B is a view illustrating a handle in an unfolded state with a first adhesive member according to an embodiment of the disclosure;
FIG. 19C is a view illustrating a handle in a folded state with a first adhesive member according to an embodiment of the disclosure;
FIG. 20A is a partial side cross-sectional view illustrating an electronic device according to an embodiment of the disclosure;
FIG. 20B is a view illustrating a state in which a handle is coupled to a support structure according to an embodiment of the disclosure;
FIG. 20C is a view illustrating a state in which a handle is coupled to a support structure according to an embodiment of the disclosure;
FIG. 20D is a view illustrating a state in which a rear plate is completely coupled to a support structure according to an embodiment of the disclosure;
FIG. 21A is a rear view illustrating a separation direction of a socket and an arrangement of a first adhesive member with respect to a rear plate according to an embodiment of the disclosure;
FIG. 21B is a rear view illustrating a separation direction of a socket and an arrangement of a first adhesive member with respect to a rear plate according to an embodiment of the disclosure;
FIG. 21C is a rear view illustrating a separation direction of a socket and an arrangement of a first adhesive member with respect to a rear plate according to an embodiment of the disclosure;
FIG. 21D is a rear view illustrating a separation direction of a socket and an arrangement of a first adhesive member with respect to a rear plate according to an embodiment of the disclosure;
FIG. 21E is a rear view illustrating a separation direction of a socket and an arrangement of a first adhesive member with respect to a rear plate according to an embodiment of the disclosure;
FIG. 21F is a rear view illustrating a separation direction of a socket and an arrangement of a first adhesive member with respect to a rear plate according to an embodiment of the disclosure;
FIG. 22A is a rear view illustrating an arrangement of a first adhesive member with respect to a rear plate according to an embodiment of the disclosure;
FIG. 22B is a rear view illustrating an arrangement of a first adhesive member with respect to a rear plate according to an embodiment of the disclosure; and
FIG. 22C is a rear view illustrating an arrangement of a first adhesive member with respect to a rear plate according to an embodiment of the disclosure.

Throughout the drawings, like reference numerals may be assigned to like parts, components, and/or structures.

### [Mode for the Invention]

The following description taken in conjunction with the accompanying drawings is provided to aid a comprehensive understanding of various embodiments as defined by the claims and equivalents thereto. The following description may include various specific details to aid understanding, but these may be considered exemplary only. Hence, it should be appreciated by one of ordinary skill in the art that various changes or modifications may be made to the embodiments without departing from the scope of the disclosure. Descriptions of well-known functions and configurations may be omitted for clarity and conciseness.

The terms and words used in the following description and claims are not limited to the dictionary meaning, but are used only by the inventors to enable a clear and consistent understanding of the disclosure. Accordingly, it will be apparent to one of ordinary skill in the art that the following description of various embodiments is provided by way of example only and not to limit the disclosure as defined by the appended claims and equivalents thereof.

As used herein, the singular forms "a," "an," and "the" are intended to include the plural forms as well, unless the context clearly indicates otherwise. For example, the phrase "surface of a component" may refer to one or more of surfaces of the component.

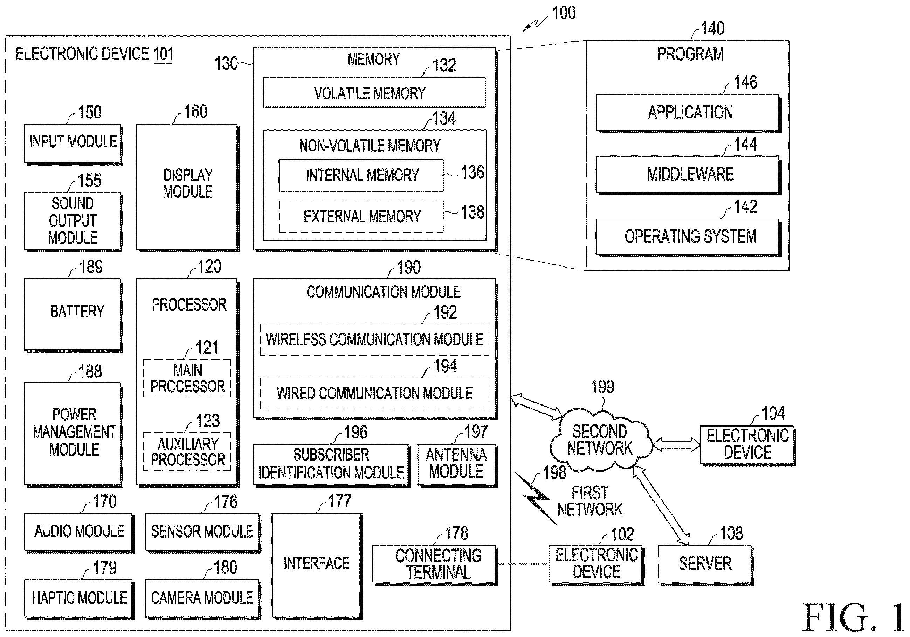

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or a sub processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The sub processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the sub processor 123 (e.g., an image signal processor or a communication processor) may be implemented as part of another component (e.g., the camera module 180 or the communication module 190) functionally related to the sub processor 123. According to an embodiment, the sub processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, a length direction, a width direction, and/or a thickness direction of the electronic device may be mentioned and may be defined as a 'Y-axis direction," 'X-axis direction', and/or 'Z-axis direction,' respectively. In an embodiment, 'negative/positive (-/+)' may be mentioned together with the Cartesian coordinate system exemplified in the drawings with respect to the direction in which the component is oriented. For example, the front surface of the electronic device or housing may be defined as a 'surface facing in the +Z direction,' and the rear surface may be defined as a 'surface facing in the -Z direction'. In an embodiment, the side surface of the electronic device or housing may include an area facing in the +X direction, an area facing in the +Y direction, an area facing in the -X direction, and/or an area facing in the -Y direction. In another embodiment, the 'X-axis direction' may mean including both the '-X direction' and the '+X direction'. It should be noted that the directions are so defined with respect to the Cartesian coordinate system shown in the drawings for the sake of brevity of description, and the description of these directions or components do not limit an embodiment of the disclosure. For example, the direction in which the front surface or rear surface faces may be varied depending on the unfolded state or folded state of the electronic device, and the above-mentioned directions may be interpreted as different ones depending on the user's way to grip.

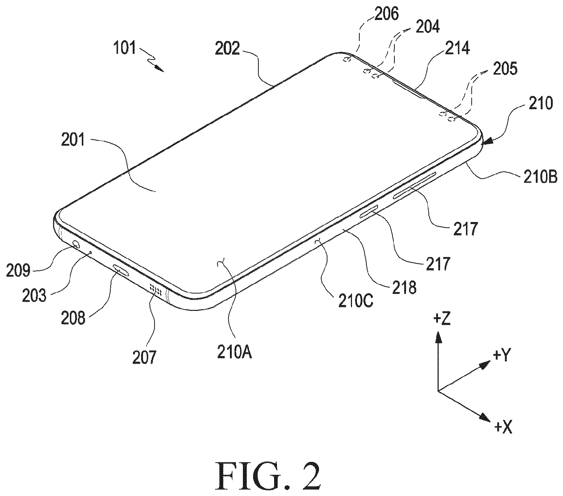

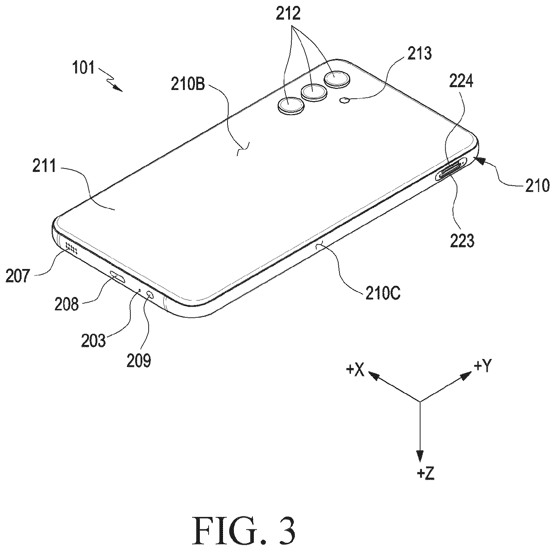

FIG. 2 is a front perspective view illustrating an electronic device according to an embodiment of the disclosure; FIG. 3 is a perspective view illustrating a rear surface of the electronic device of FIG. 2 according to an embodiment of the disclosure; The configuration of the electronic device 101 of FIGS. 2 and 3 may be identical in whole or part to the configuration of the electronic device 101 of FIG. 1.

Referring to FIGS. 2 and 3, according to an embodiment, an electronic device 101 may include a housing 210 including a first side (or front surface) 210A, a second side (or rear surface) 210B, and a side surface 210C surrounding the space between the first surface 210A and the second surfaces 210B. According to an embodiment (not illustrated), the housing 210 may denote a structure forming the first surface 210A of FIG. 2, the second surface 210B of FIG. 3, and some of the side surfaces 210C. According to an embodiment, at least part of the first surface 210A may have a substantially transparent front plate 202 (e.g., a glass plate or polymer plate including various coat layers). The second surface 210B may be formed by a rear plate 211 that is substantially opaque. The rear plate 211 may be formed of, e.g., laminated or colored glass, ceramic, polymer, metal (e.g., aluminum, stainless steel (STS), or magnesium), or a combination of at least two thereof. The side surface 210C may be formed by a side structure (or "side bezel structure") 218 that couples to the front plate 202 and the rear plate 211 and includes a metal and/or polymer. In an embodiment, the rear plate 211 and the side structure 218 may be integrally formed together and include the same material (e.g., a metal, such as aluminum).

Although not shown, the front plate 202 may include area(s) that bend from at least a portion of an edge toward the rear plate 211 and seamlessly extend. In an embodiment, only one of the areas of the front plate 202 (or the rear plate 211), which bend to the rear plate 211 (or front plate 202) and extend may be included in one edge of the first surface 210A. According to an embodiment, the front plate 202 or rear plate 211 may be substantially flat and, in this case, may not include an area bending and extending. When an area bending and extending is included, the thickness of the electronic device 101 at the portion including the area bending and extending may be smaller than the thickness of the rest.

According to an embodiment, the electronic device 101 may include at least one of a display 201, an audio module (not illustrated) (e.g., the audio module 170 of FIG. 1) including at least one sound hole 203, 207, and 214, a sensor module 204 (e.g., the sensor module 176 of FIG. 1), camera modules 205, 212, and 213 (e.g., the camera module 180 of FIG. 1), a key input device 217 (e.g., the input module 150 of FIG. 1), or connector holes 208 and 209 (e.g., the connecting terminal 178 of FIG. 1). In an embodiment, the electronic device 101 may exclude at least one (e.g., the key input device 217 or the light emitting device 206) of the components or may add other components.

According to an embodiment, the display 201 may be visually revealed through, e.g., a majority portion of the front plate 202. In an embodiment, at least a portion of the display 201 may be visually exposed through the front plate 202 forming the first surface 210A, or through a portion of the side surface 210C. In an embodiment, the edge of the display 201 may be formed to be substantially the same in shape as an adjacent outer edge of the front plate 202. In an embodiment (not illustrated), the interval between the outer edge of the display 201 and the outer edge of the front plate 202 may remain substantially even to give a larger area of visual exposure of the display 201.

In an embodiment (not illustrated), the screen display region of the display 201 may have a recess or opening in a portion thereof, and at least one or more of the sound hole 214, sensor module 204, camera module 205, and light emitting device 206 may be aligned with the recess or opening. In an embodiment (not illustrated), at least one or more of the sound module 214, sensor module 204, camera module 205, fingerprint sensor (not illustrated), and light emitting device 206 may be included on the rear surface of the screen display area of the display 201. In an embodiment (not illustrated), the display 201 may be disposed to be coupled with, or adjacent, a touch detecting circuit, a pressure sensor capable of measuring the strength (pressure) of touches, and/or a digitizer for detecting a magnetic field-type stylus pen. In an embodiment, at least a portion of the sensor module 204 and/or at least a portion of the key input device 217 may be disposed on the side surface 210C.

According to an embodiment, the audio module (not illustrated) may include a microphone hole 203 and sound holes 207 and 214. A microphone for acquiring external sounds may be disposed in the microphone hole 203. In an embodiment, a plurality of microphones may be disposed to detect the direction of the sound. According to an embodiment, the sound holes 207 and 214 may include an external sound hole 207 and a phone receiver hole 214. In an embodiment, the sound holes 207 and 214 and the microphone hole 203 may be implemented as a single hole, or speakers may be included in the audio module without the sound holes 207 and 214 (e.g., piezo speakers).

According to an embodiment, the sensor module 204 may generate an electrical signal or a data value corresponding to an internal operating state of the electronic device 101 or an external environmental state. The sensor module 204 may include, e.g., a first sensor module 204 (e.g., a proximity sensor) and/or a second sensor module (not illustrated) (e.g., a fingerprint sensor) disposed on the front surface 210A of the housing 210. According to an embodiment, an additional sensor module may be disposed on the second surface 210B of the housing 210. The fingerprint sensor (not illustrated) may be disposed on the second surface 210B or side surface 210C as well as the first surface 210A (e.g., the display 201) of the housing 210. The electronic device 101 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 may include a first camera module 205 facing the first surface 210A of the electronic device 101, and a second camera module 212 and/or a flash 213 facing the second surface 210B. For example, the first camera module 205 and/or the second camera module 212 may include one or more lenses, an image sensor, and/or an image signal processor. According to an embodiment, some camera module 205 of the camera modules 205 and 212 and/or a sensor module (e.g., the sensor module 204) may be disposed to be exposed to the outside through at least a portion of the display 201. According to an embodiment, the first camera module 205 may include a punch hole camera disposed inside a hole or recess formed in the rear surface of the display 201. For example, the first camera module 205 may receive at least a portion of the light incident on the first surface 210A (or front surface) of the electronic device 101 through the display 201 inside the electronic device 101. According to an embodiment, the first camera module 205 and/or the sensor module 204 may be disposed to contact the external environment through a transparent area from the internal space of the electronic device 101 to the front plate 202 of the display 201. Further, a sensor module 204 may be disposed to perform its functions without being visually exposed through the front plate 202 in the internal space of the electronic device.

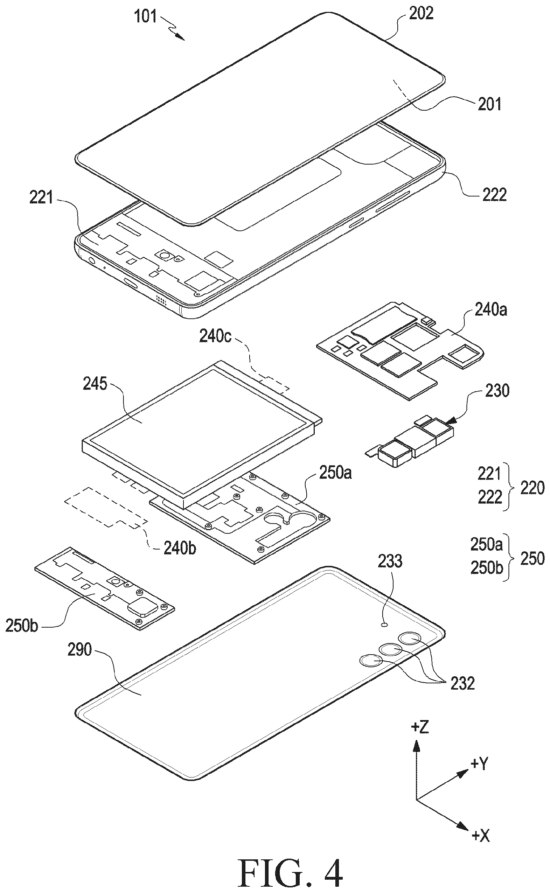

According to an embodiment, the second camera module 212 may be disposed inside the housing 210 so that the lens is exposed to the second surface 210B (or rear surface) of the electronic device 101. For example, the camera module 212 may be electrically connected to the printed circuit board (e.g., the printed circuit board 240a of FIG. 4). For example, the flash 213 may include a light emitting diode or a xenon lamp. In an embodiment, one or more lenses (an infrared (IR) camera, a wide-angle lens, and a telephoto lens) and image sensors may be disposed on one surface of the electronic device 101. In an embodiment, the flash 213 may radiate infrared light. For example, the infrared light radiated from the flash 213 and reflected by the object may be received through the sensor module (not illustrated) disposed on the second surface 210B of the housing 210. The electronic device 101 or the processor (e.g., the processor 120 of FIG. 1) may detect depth information about the subject based on the time point when the infrared light is received from the third sensor module.

The camera modules 205, 212, and 213 are not limited to the above-described structure. Depending on the structure of the electronic device 101, various design changes may be made--e.g., only some of the camera modules may be mounted, or a new camera module may be added.

According to an embodiment, the electronic device 101 may include a plurality of camera modules (e.g., a dual camera or triple camera) having different attributes (e.g., angle of view) or functions. For example, a plurality of camera modules 205 and 212 including lenses having different angles of view may be configured, and the electronic device 101 may control to change the angle of view of the camera modules 205 and 212 performed by the electronic device 101 based on the user's selection. At least one of the plurality of camera modules 205 and 212 may form, for example, a wide-angle camera and at least another of the plurality of camera modules may form a telephoto camera. Similarly, at least one of the plurality of camera modules 205 and 212 may be a front camera and at least another of the plurality of camera modules may be a rear camera. Further, the plurality of camera modules 205 and 212 may include at least one of a wide-angle camera, a telephoto camera, and an infrared (IR) camera (e.g., a time of flight (TOF) camera, a structured light camera). According to an embodiment, the IR camera may be operated as at least a portion of the sensor module. For example, the TOF camera may be operated as at least a portion of a sensor module (not shown) for detecting the distance to the subject.

According to an embodiment, the key input device 217 may be disposed on the side surface 210C of the housing 210. In an embodiment, the electronic device 101 may exclude all or some of the above-mentioned key input devices 217 and the excluded key input devices 217 may be implemented in other forms, e.g., as soft keys, on the display 201. In an embodiment, the key input device may include the sensor module disposed on the second surface 210B of the housing 210.

According to an embodiment, the light emitting device 206 may be disposed on the first surface 210A of the housing 210, for example. The light emitting device 206 may provide, e.g., information about the state of the electronic device 101 in the form of light. In an embodiment, the light emitting device 206 may provide a light source that interacts with, e.g., the process of the camera module 205. The light emitting device 206 may include, e.g., an light emitting diode (LED), an infrared (IR) LED, or a xenon lamp.

According to an embodiment, the connector holes 208 and 209 may include, e.g., a first connector hole 208 for receiving a connector (e.g., a universal serial bus (USB) connector) for transmitting or receiving power and/or data to/from an external electronic device and/or a second connector hole (e.g., an earphone jack) 209 for receiving a connector for transmitting or receiving audio signals to/from the external electronic device.

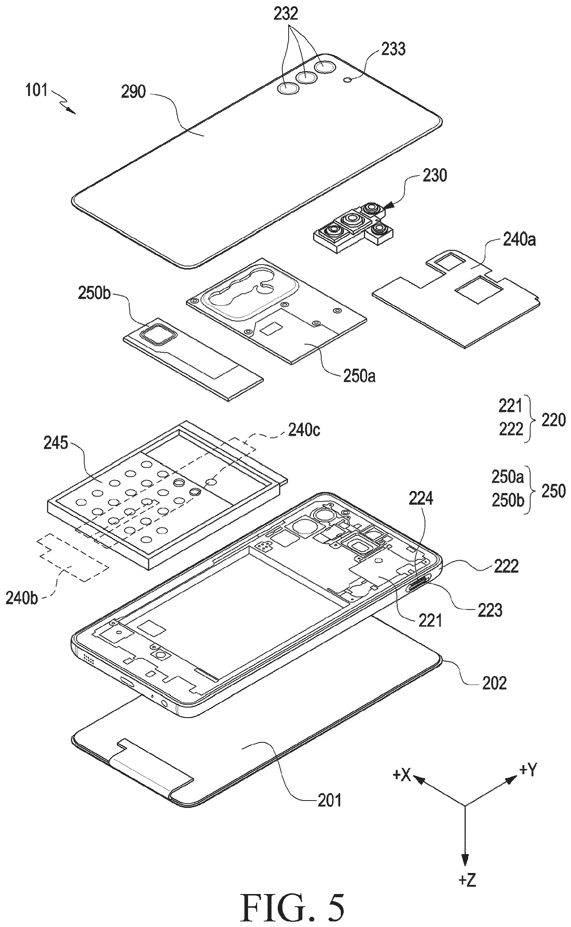

FIG. 4 is a front exploded perspective view illustrating an electronic device according to an embodiment of the disclosure. FIG. 5 is a rear exploded perspective view illustrating an electronic device according to an embodiment of the disclosure.

Referring to FIGS. 4 and 5, an electronic device 101 (e.g., the electronic device 101 of FIG. 1 and/or the electronic device 101 of FIG. 2 or 3) includes a display 201 (e.g., the display 201 of FIG. 2), a front plate 202 (e.g., the front plate 202 of FIG. 2), a supporting structure 221 (e.g., a bracket), a side bezel structure (or a side bezel structure) 222, a camera module 230 (e.g., the camera module 180 of FIG. 1), at least one printed circuit board (or board assembly) 240a and 240b, a battery 245 (e.g., the battery 189 of FIG. 1), a rear case 250, an antenna (not illustrated) (e.g., the antenna module 197 of FIG. 1), and/or a rear plate 290 (e.g., the rear plate 211 of FIG. 3). According to an embodiment, when the plurality of printed circuit boards 240a and 240b are included, the electronic device 101 may include at least one flexible circuit board 240c to electrically connect different printed circuit boards. For example, the printed circuit boards 240a and 240b may include a first circuit board 240a disposed above (e.g., in the +Y-axis direction) the battery 245 and a second circuit board 240b disposed below (e.g., in the -Y-axis direction), and flexible printed circuit board 240c may electrically connect the first circuit board 240a and the second circuit board 240b.

According to an embodiment, the electronic device 101 may omit at least one (e.g., the supporting structure 221, the rear case 250, or the flexible circuit board 240c) of the components or may further include other components. At least one of the components of the electronic device 101 may be the same or similar to at least one of the components of the electronic device 101 of FIG. 2 or 3 and no duplicate description is made below.

In an embodiment, at least a portion of the supporting structure 221 may be provided in a flat plate shape. In an embodiment, the supporting structure 221 may be disposed inside the electronic device 101 to be connected to the side bezel structure 222 or may be integrally formed with the side bezel structure 222. For example, the supporting structure 221 may be formed of a conductive material and/or a non-conductive material (e.g., polymer). When the supporting structure 221 at least partially includes a conductive material such as metal, a portion of the side bezel structure 222 or the supporting structure 221 may function as an antenna. The supporting structure 221 may include two surfaces facing in directions opposite to each other. The display 201 may be disposed on one of the two surfaces of the supporting structure 221, and the printed circuit boards 240a and 240b may be disposed on the other surface.

According to an embodiment, the supporting structure 221 and the side bezel structure 222 may be collectively referred to as a front case or a housing 220. According to an embodiment, the housing 220 may be generally understood as a structure for receiving, protecting, or disposing electrical/electronic components such as the printed circuit boards 240a and 240b or the battery 245. In an embodiment, it may be understood that the housing 220 includes a structure visually or tactilely recognizable by the user on the exterior of the electronic device 101, e.g., the side bezel structure 222, the front plate 202, and/or the rear plate 290. In an embodiment, the front surface or the rear surface of the housing 220 may refer to the first surface 210A of FIG. 2 or the second surface 210B of FIG. 3. In an embodiment, the supporting structure 221 may be disposed between the front plate 202 (e.g., the first surface 210A of FIG. 2) and the rear plate 290 (e.g., the second surface 210B of FIG. 3), and may function as a structure for disposing electrical/electronic components such as the printed circuit board 240a or 240b or the camera module 230. In the following detailed description, it may be exemplified that the camera module 230 of the electronic device 101 generally includes a configuration for receiving incident light through the second surface 210B of the electronic device 101, but the electronic device 101 may further include a camera module (e.g., the camera module 205 of FIG. 2) and/or a sensor module (e.g., the sensor module 204 of FIG. 2) disposed to be exposed to the outside through at least a portion of the display 201.

According to an embodiment, the camera module 230 may include at least one camera module, e.g., at least one of the plurality of camera modules illustrated in FIGS. 4 and 5. In an embodiment, the camera module 230 may be disposed on a portion of the supporting structure 221 at a position adjacent to the printed circuit boards 240a and 240b. In an embodiment, the camera module 230 may be at least partially surrounded by the rear case 250 (e.g., the upper rear case 250a). According to an embodiment, the camera module 230 may receive at least part of the incident light through the optical hole inside the electronic device 101 or the cover window(s) 232 and 233 disposed on the rear surface (e.g., the second surface 210B of FIG. 3) of the electronic device 101. According to an embodiment, the camera module 230 may be generally aligned with any one of the cover window(s) 232 and 233.

According to an embodiment, a circuit device (e.g., a processor), a communication module (e.g., the communication module 190 of FIG. 1), a power management module (e.g., the power management module 188), memory (e.g., the memory 130 of FIG. 1), an interface (e.g., the interface 177 of FIG. 1), or various electrical/electronic components implemented in the form of an integrated circuit chip may be disposed on the printed circuit board 240a or 240b. The processor (e.g., the processor 120 of FIG. 1) may include one or more of a central processing unit, an application processor, a graphic processing device, an image signal processing, a sensor hub processor, or a communication processor. The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector. According to an embodiment, the printed circuit boards 240a and 240b may be provided with an electromagnetic shielding environment from the rear case 250.

According to an embodiment, the battery 245 may be a device for supplying power to at least one component of the electronic device 101. The battery 189 may include, e.g., a primary cell which is not rechargeable, a secondary cell which is rechargeable, or a fuel cell. At least a portion of the battery 245 may be disposed on substantially the same plane as the printed circuit board 240a and 240b. The battery 245 may be integrally or detachably disposed inside the electronic device 101.

According to an embodiment, the rear case 250 may include an upper rear case 250a and a lower rear case 250b. In an embodiment, the upper rear case 250a may be disposed to surround the printed circuit boards 240a and 240b (e.g., the first circuit board 240a), together with a portion of the supporting structure 221. For example, the upper rear case 250a may be disposed to face the supporting structure 221 with the first circuit board 240a interposed therebetween.

In an embodiment, the lower rear case 250b may be utilized as a structure in which electrical/electronic components, such as an interface (e.g., a USB connector, an SD card/MMC connector, or an audio connector) may be disposed. According to an embodiment, Electrical/electronic components, such as an interface (e.g., a USB connector, an SD card/MMC connector, or an audio connector) may be disposed on an additional printed circuit board (not illustrated). In this case, the lower rear case 250b, together with the other part of the supporting structure 221, may be disposed to surround the additional printed circuit board (not illustrated). For example, an interface disposed in an additional printed circuit board not illustrated or the lower rear case 250b may be disposed corresponding to the sound hole 207 or the connector holes 208 and 209 of FIG. 2.

According to an embodiment, the antenna (not illustrated) may include, e.g., a conductor pattern implemented on the surface of the rear case 250 through a laser direct structuring method. In an embodiment, the antenna may include a printed circuit pattern formed on the surface of the thin film. The thin film-type antenna may be disposed between the rear plate 290 and the battery 245. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. In an embodiment, another antenna structure may be formed by a part or a combination of the supporting structure 221 and/or the side bezel structure 222.

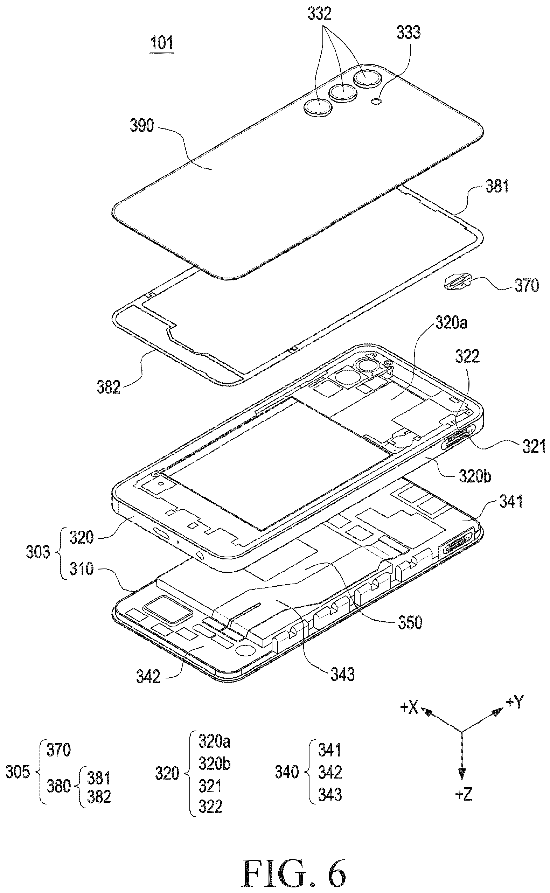

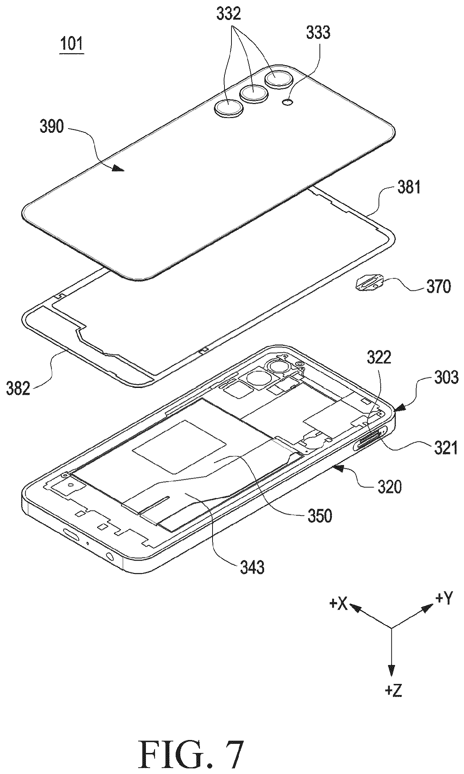

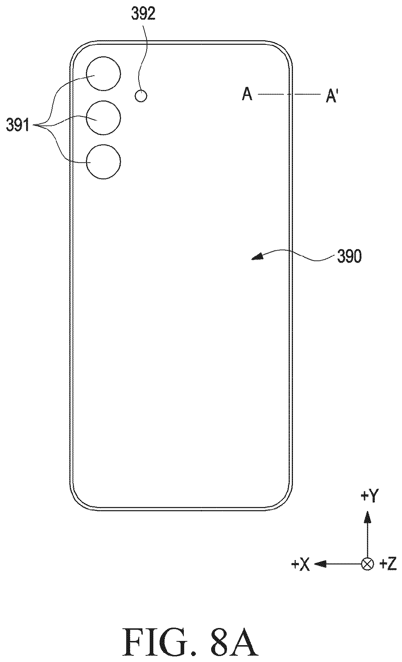

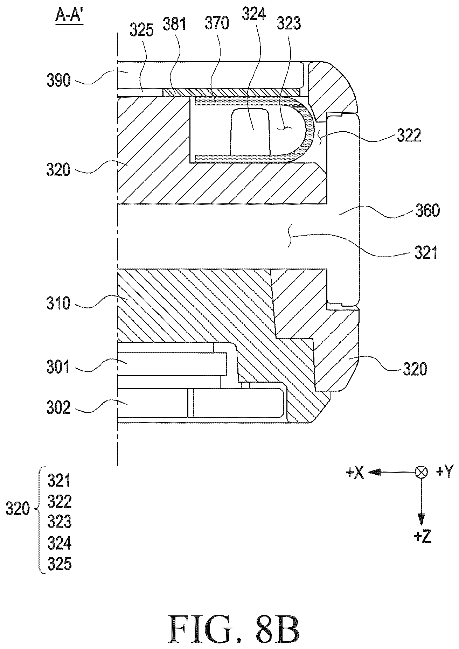

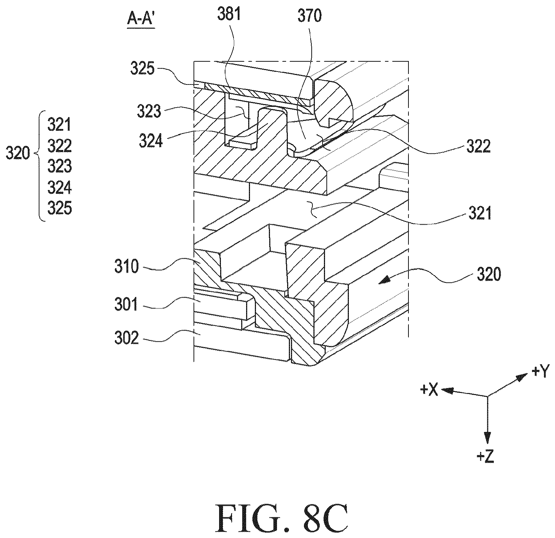

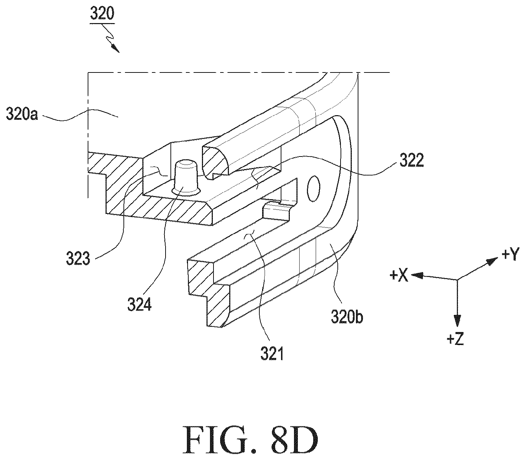

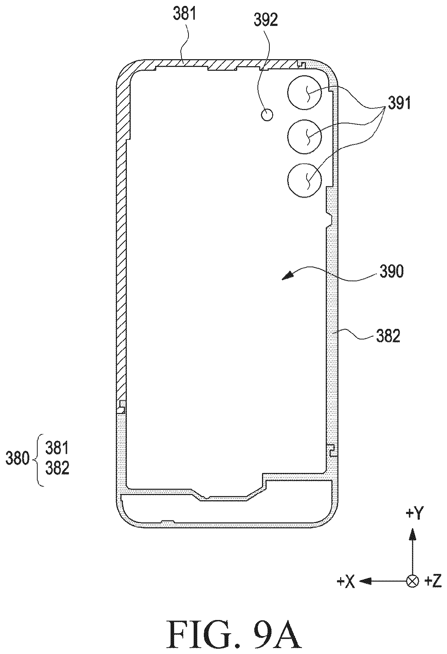

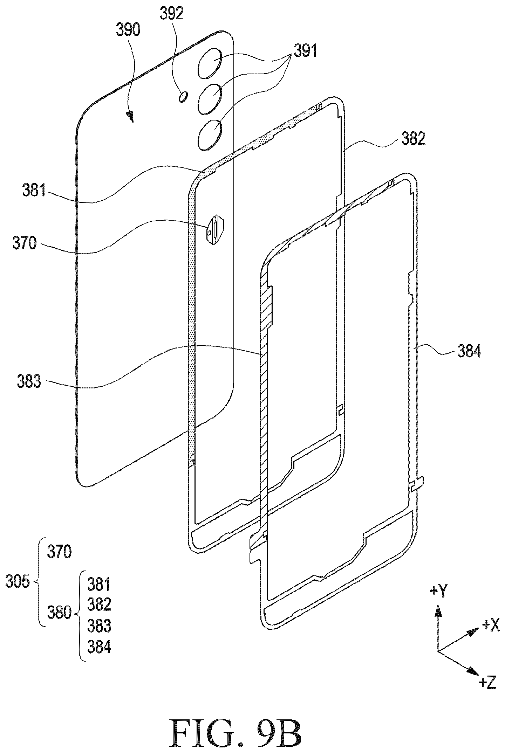

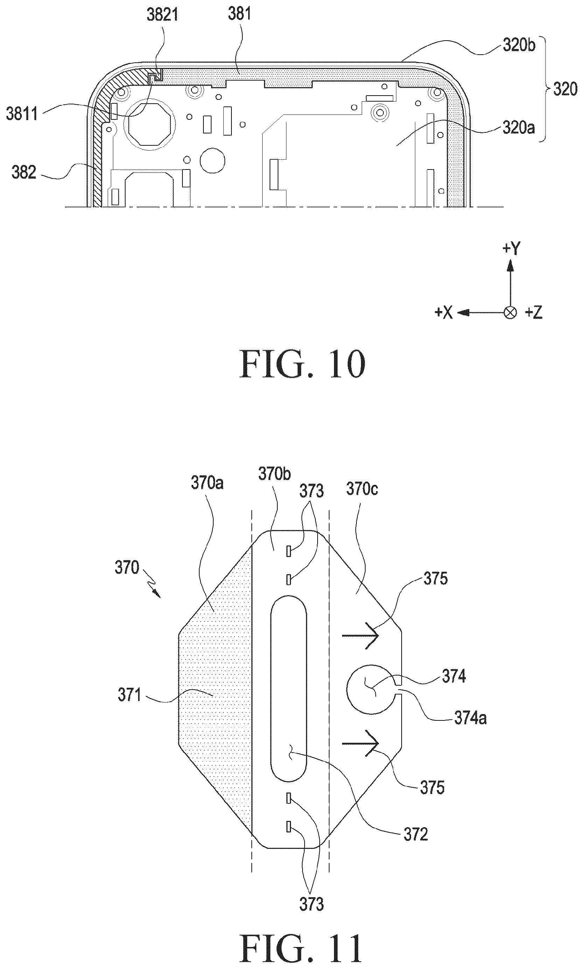

FIG. 6 is an exploded perspective view illustrating a partial configuration of an electronic device according to an embodiment of the disclosure. FIG. 7 is an exploded perspective view illustrating a partial configuration of an electronic device according to an embodiment of the disclosure. FIG. 8A is a rear view illustrating an electronic device according to an embodiment of the disclosure. FIG. 8B is a side cross-sectional view taken along line A-A of FIG. 8A according to an embodiment of the disclosure. FIG. 8C is a cross-sectional perspective view taken along line A-A' of FIG. 8A according to an embodiment of the disclosure. FIG. 8D is a view illustrating a first hole, a second hole, a first space, and a guide pin of a support structure according to an embodiment of the disclosure. FIG. 9A is a front view illustrating a rear plate and an adhesive member of an electronic device according to an embodiment of the disclosure. FIG. 9B is an exploded perspective view illustrating a rear plate and a removal structure of an electronic device according to an embodiment of the disclosure. FIG. 10 is an enlarged view illustrating an adhesive member disposed on a rear plate according to an embodiment of the disclosure. FIG. 11 is a plan view illustrating a handle according to an embodiment of the disclosure.

The configuration of the electronic device 101 of FIGS. 6, 7, and 8A may be identical in whole or part to the configuration of the electronic device 101 of FIGS. 1 to 5.

Referring to FIGS. 5 to 8C, in an embodiment, the electronic device 101 may include a housing 303 and a display 301 (e.g., the display 201 of FIGS. 2, 4 and 5) disposed in the housing 303, a front plate 302 (e.g., the front plate 202 of FIGS. 2, 4 and 5), at least one circuit board 340 (e.g., the circuit boards 240a, 240b, and 240c of FIGS. 4 and 5), a battery 350 (e.g., the battery 245 of FIGS. 4 and 5), a socket 360, and a separation structure 305 (or a rear plate separation structure). For example, the circuit board 340 may include a first circuit board (e.g., the first circuit board 240a of FIGS. 4 and 5), a second circuit board (e.g., the second circuit board 240b of FIGS. 4 and 5), and a flexible circuit board (e.g., the flexible circuit board 240c of FIGS. 4 and 5). Referring to FIGS. 6 and 7, according to an embodiment, the electronic device 101 may include windows 332 and 333 (e.g., the windows 232 and 233 of FIGS. 4 and 5) disposed on the rear plate 390.

According to an embodiment of the disclosure, as described below, the separation structure 305 may be provided in a structure in which the rear plate 390 may be separated from the electronic device 101 by the user easily manipulating the handle 370 without a separate tool or special tool. Accordingly, the separation structure 305 may help the user repair or replace (e.g., self-replacement of the battery 350) of the internal structure or electrical/electronic component of the electronic device 101 disposed inside the rear plate 390 on its own without the help of an expert.

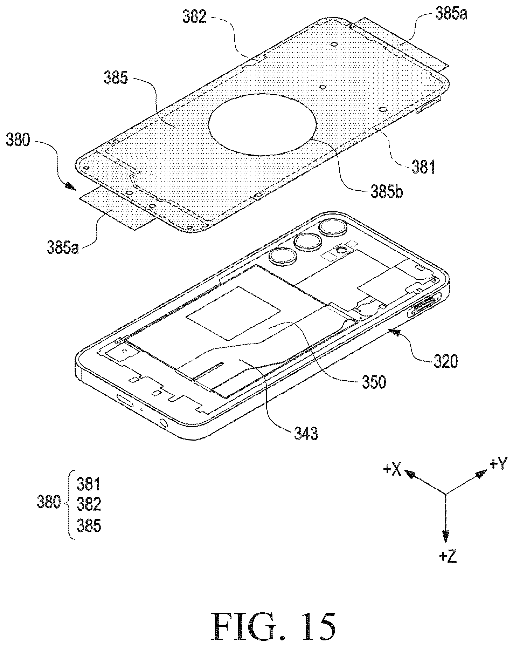

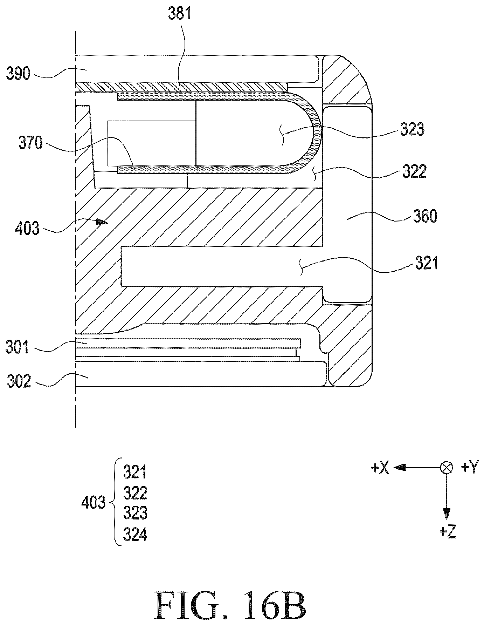

According to an embodiment, the housing 303 may include a front support structure 310 (or first support structure, front), a support structure 320 (e.g., the support structure 220 of FIGS. 4 and 5) (or the second support structure, the rear support structure, the rear), and a rear plate 390 (e.g., the rear plate 211 of FIG. 3, and the rear plate 290 of FIGS. 4 and 5) disposed to face at least a portion of the support structure 320. According to an embodiment, the front support structure 310 and the support structure 320 may be connected to each other as individual members, but the disclosure is not limited thereto, and according to an embodiment (e.g., FIGS. 15A, 15B, and 16B), the front support structure 310 and the support structure 320 may be integrally formed as one member. According to an embodiment, the rear plate 390 may be spaced apart from the support structure 320 with a first gap 325, and an adhesive member 380 may be disposed in the first gap 325.

According to an embodiment, the support structure 320 of the housing 303 may include a plate portion 320a disposed to at least partially face the rear plate 390, and a side portion 320b disposed along at least a portion of an edge of the plate portion 320a.

According to an embodiment, the support structure 320 may include a first hole 321 formed in the side portion 320b, a second hole 322 formed around the first hole 321, and a first space 323 positioned in the housing 303 or the support structure 320 (e.g., the plate portion 320a). According to an embodiment, the first space 323 may be connected to the second hole 322, and may be, e.g., a space extending from the second hole 322 to the inside of the plate portion 320a. As is described below, according to an embodiment, a socket 360 may be disposed in the first hole 321 and the second hole 322, and a handle 370 may be disposed in the first space 323.

Referring to FIGS. 8B, 8C, and 8D, according to an embodiment, the support structure 320 may further include a guide pin 324 protruding from a portion of the surface surrounding the first space 323 toward the first space 323. According to an embodiment, the guide pin 324 may be formed to pass through the guide hole 374 formed in the handle 370, and may serve to support and maintain the handle 370 in the first space 323. For example, the guide pin 342 may help support the rear plate 390 above the first space 323 that is not supported by the support structure 320 by maintaining the handle 370 in the assembly position.

Referring to FIGS. 8A, 9A, and 9B, according to an embodiment, the rear plate 390 may include window holes 391 and 392 formed to position the windows 332 and 333.

According to an embodiment, the socket 360 may be disposed in the support structure 320 (e.g., the side portion 320b) so that the first hole 321 and the second hole 322 are not visually exposed or to close the first hole 321 and the second hole 322. According to an embodiment, the socket 360 may be formed so that at least one storage medium may be disposed. For example, the socket 360 may be a tray member including a seating portion or a concave portion in which the storage medium may be seated on one side surface (e.g., the surface in the +Z-axis direction). For example, the storage medium may include a subscriber identification module card (or the user authentication module card) or a memory card.

According to an embodiment, the adhesive member 380 may be configured to couple the rear plate 390 to the support structure 320 or to separate the rear plate 390 from the support structure 320. According to an embodiment, the adhesive member 380 may include a first adhesive member 381 and a second adhesive member 382 disposed in different sections (or areas) of the first gap 325. For example, the first adhesive member 381 may be disposed in the first area of the first gap 325, and the second adhesive member 382 may be disposed in the second area around the first area of the first gap 325. In other words, the first adhesive member 381 and the second adhesive member 382 may be disposed not to overlap in the thickness direction (e.g., the Z-axis direction) of the electronic device 101.

According to an embodiment, the first adhesive member 381 may be coupled or fixed to a portion (e.g., the first area 370a or the adhesive portion 371) of the handle 370. According to an embodiment, when the handle 370 is withdrawn to the outside of the electronic device 101 through the second hole 322, the first adhesive member 381 may be configured to be withdrawn to the outside of the electronic device 101 through the first space 323 and the second hole 322 together with the handle 370.

According to an embodiment, the first adhesive member 381 may be formed of a material having greater flexibility, elasticity, and/or stretchability than the second adhesive member 382. For example, the first adhesive member 381 may be configured to decrease adhesive force when pulled and stretched and, when pulled and stretched, it may be more easily separated from the adherend than the second adhesive member 382. For example, the first adhesive member 381 may include only an adhesive layer (or pressure-sensitive adhesive layer) without a base layer.

According to an embodiment, the second adhesive member 382 may include a plurality of layers including a base layer and an adhesive layer (or pressure-sensitive adhesive layer). For example, the adhesive layer of the second adhesive member 382 may include a pressure-sensitive adhesive that may be attached to the adherend by pressure without a chemical reaction. For example, the base layer of the second adhesive member 382 may be formed of a material capable of being coated with an adhesive and supporting the pressure-sensitive adhesive layer. For example, the second adhesive member 382 (e.g., double-sided tape) may include a pressure-sensitive adhesive layer detachably coupled to the adherend (e.g., the support structure 320 and rear plate 390) on one or two opposite side surfaces.

Referring to FIGS. 9A and 9B, FIG. 9A may illustrate the adhesive member 380 coupled to the rear plate 390, and FIG. 9B may be an exploded perspective view illustrating the adhesive member 380 and the handle 370 in a state before being coupled to the rear plate 390 as illustrated in FIG. 9. Referring to FIG. 9B, according to an embodiment, the adhesive member 380 may further include a first release sheet 383 and a second release sheet 384. According to an embodiment, the first release sheet 383 and the second release sheet 384 may be provided in a state disposed to correspond to the adhesive surfaces of the first adhesive member 381 and the second adhesive member 382, respectively. For example, the first release sheet 383 and the second release sheet 384 may be removed after the first adhesive member 381 and the second adhesive member 382 are coupled to the rear plate 390, and the adhesive surfaces of the first adhesive member 381 and the second adhesive member 382 exposed by removing the first release sheet 383 and the second release sheet 384 may be attached to the support structure 320.

Referring to FIG. 10, according to an embodiment, the first adhesive member 381 may include a first coupling structure 3811, and the second adhesive member 382 may include a second coupling structure 3821 having a form of engaging with the first coupling structure 3811. For example, the first coupling structure 3811 and the second coupling structure 3821 may have at least one uneven portion (e.g., protrusion and/or depression) shape in portions facing each other. According to an embodiment, the first coupling structure 3811 and the second coupling structure 3821 may be provided as a structure (e.g., a segmented structure) that is positioned at a boundary surface between the first adhesive member 381 and the second adhesive member 382 to easily separate the first adhesive member 381 and the second adhesive member 382. According to an embodiment, the first coupling structure 3811 and the second coupling structure 3821 may be spaced apart from each other at a predetermined interval. However, the arrangement relationship between the first coupling structure 3811 and the second coupling structure 3821 is not limited, and for example, the first coupling structure 3811 and the second coupling structure 3821 may contact each other and may be provided in a weakly coupled state. According to an embodiment, when the handle 370 is withdrawn to the outside of the electronic device 101 through the second hole 322, the first adhesive member 381 may be separated from the second adhesive member 382 with the first coupling structure 3811 and the second coupling structure 3821 as boundaries, the first adhesive member 381 may be withdrawn to the outside of the electronic device 101 together with the handle 370, and the second adhesive member 382 may be configured to remain (or be maintained) in the first gap 325.

According to an embodiment, the handle 370 may be disposed in the first space 323. According to an embodiment, a portion (e.g., the first area 370a or the adhesive portion 371) of the handle 370 may be coupled to the first adhesive member 381. According to an embodiment, when the rear plate 390 is viewed in the direction in which the first space 323 is positioned or in the thickness direction (e.g., the Z-axis direction) of the electronic device 101, the handle 370 may be disposed to at least partially overlap the first adhesive member 381.

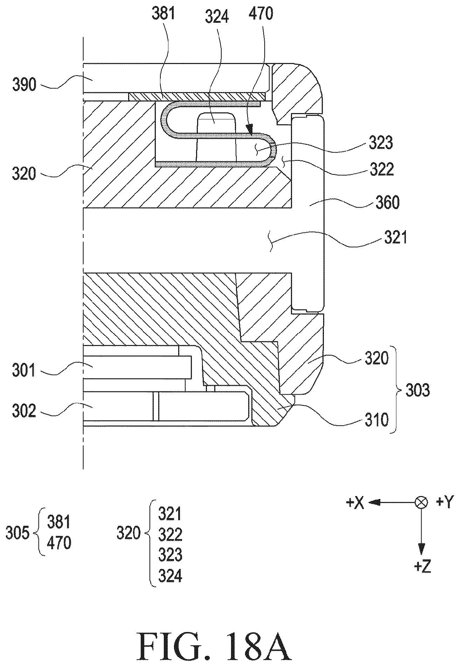

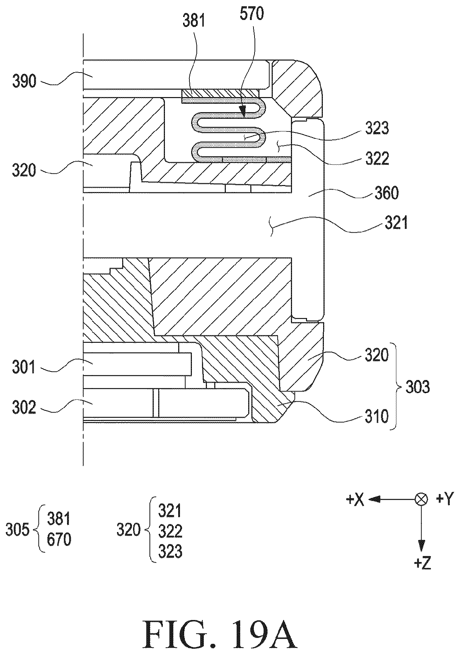

According to an embodiment, the handle 370 may be accommodated in the first space 323 in a state folded one or more times. According to the embodiments of FIGS. 6 to 11, the handle 370 is configured to be accommodated in the first space 323 in a state folded once, but the number of times that the handle 370 is folded is not limited, and for example, the handle 370 may be configured to be accommodated in the first space 323 in a state folded twice (e.g., see FIGS. 18A to 18C) or three or more times (e.g., see FIGS. 19A to 19C). For example, the handle 370 may be formed of an elastically deformable material.

According to an embodiment, the handle 370 may be provided to be withdrawn to the outside of the electronic device 101 through the second hole 322. According to an embodiment, when the handle 370 is withdrawn to the outside of the electronic device 101 through the second hole 322, the first adhesive member 381 may be withdrawn to the outside of the electronic device 101 through the first space 323 and the second hole 322 together with the handle 370, and the second adhesive member 382 may be configured to remain in the first gap 325.

Referring to FIG. 11, according to an embodiment, the handle 370 may include a first area 370a, a second area 370b extending from the first area 370a, and a third area 370c extending from the second area 370b. According to an embodiment, the handle 370 may be configured so that the second area 370b may be bent or folded so that the first area 370a and the third area 370c face each other. For example, the handle 370 may be disposed in the first space 323 in a state folded one or more times in the second area 370b.

According to an embodiment, the handle 370 may further include an adhesive portion 371 disposed on one surface of the first area 370a and coupled to the first adhesive member 381. According to an embodiment, the handle 370 may further include a bending hole 372 (or a main bending hole or first bending holes) formed in the second area 370b. For example, the bending hole 372 may have an elongated hole shape. For example, the handle 370 may include additional bending holes 373 (or second bending holes) formed around the bending hole 372 in the second area 370b and having a smaller size than the bending hole 372. For example, the additional bending holes 373 may be spaced apart from each other. For example, the additional bending holes 373 may be disposed to be aligned with each other and to be aligned with the bending holes 372 in a row. For example, the handle 370 may be configured to be folded along the bending hole 372 and/or the additional bending holes 373. For example, the bending hole 372 and/or the additional bending holes 373 may serve to guide the handle 370 to fold in the designed shape.

According to an embodiment, the handle 370 may further include a guide hole 374 formed in the third area 370c. The guide hole 374 may be formed to be disposed in the guide pin 324 disposed in the first space 323. According to an embodiment, the handle 370 may further include a guide slit 374a connected to the guide hole 374. According to an embodiment, the guide slit 374a may pass through the guide pin 324 when the handle 370 is withdrawn to the outside of the electronic device 101 through the second hole 322. For example, the periphery of the guide slit 374a of the handle 370 may be configured to be elastically deformable when passing through the guide pin 324. According to an embodiment, the guide slit 374a may serve to separate the handle 370 connected to the guide pin 324 through the guide hole 374 from the guide pin 324.

According to an embodiment, the handle 370 may further include a guide mark 375 formed around the guide hole 374 in the third area 370c. For example, the guide mark 375 may be a pattern, design, or figure in the shape of an arrow to indicate the direction in which handle 370 is to be withdrawn.

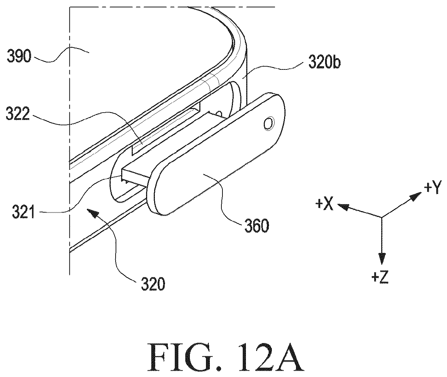

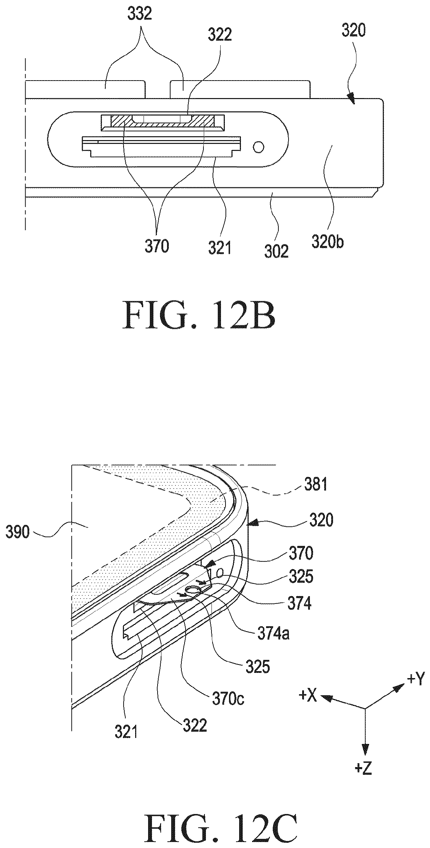

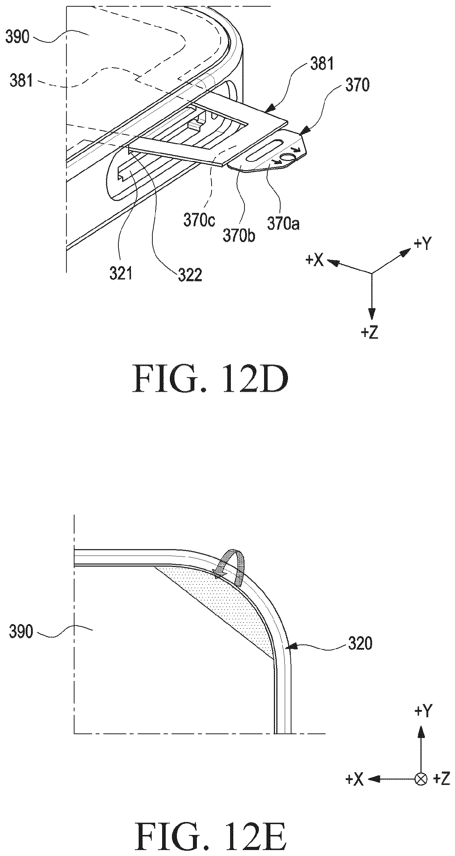

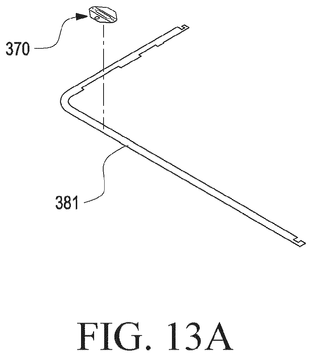

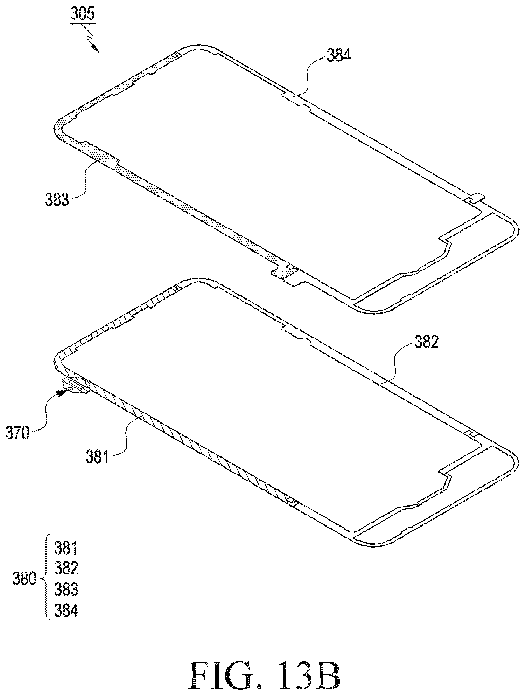

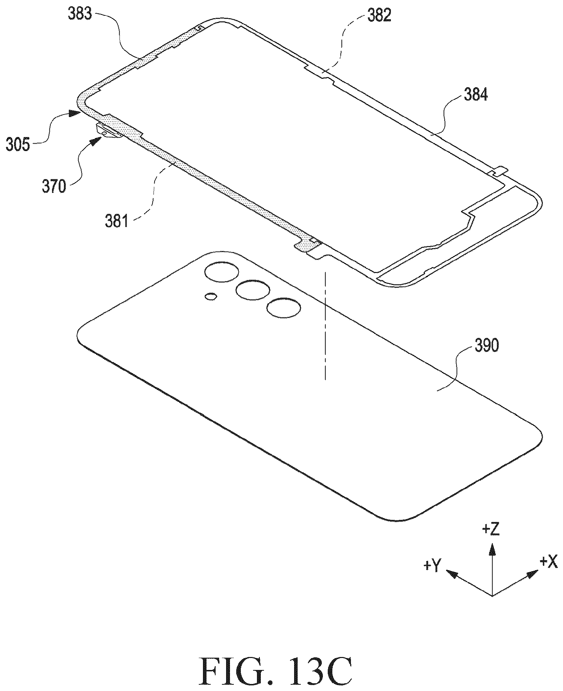

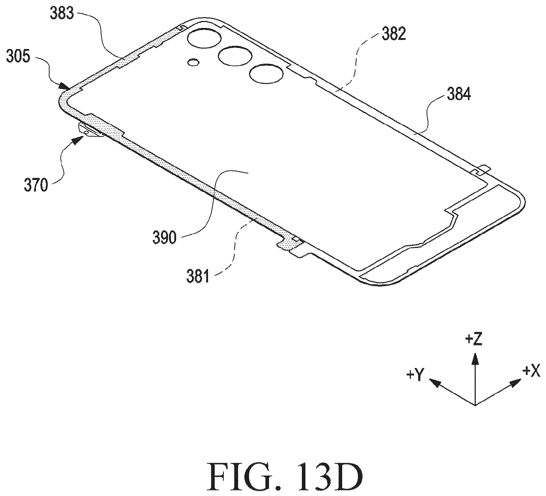

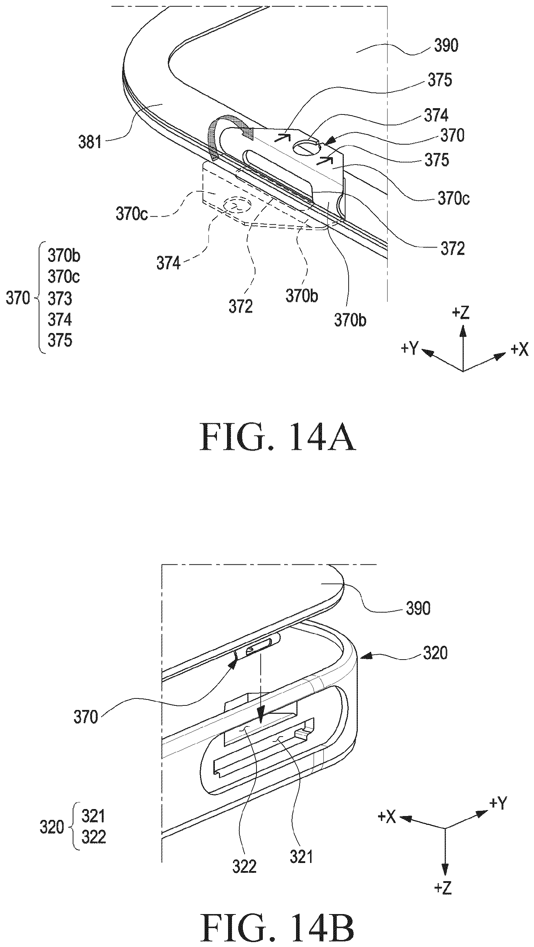

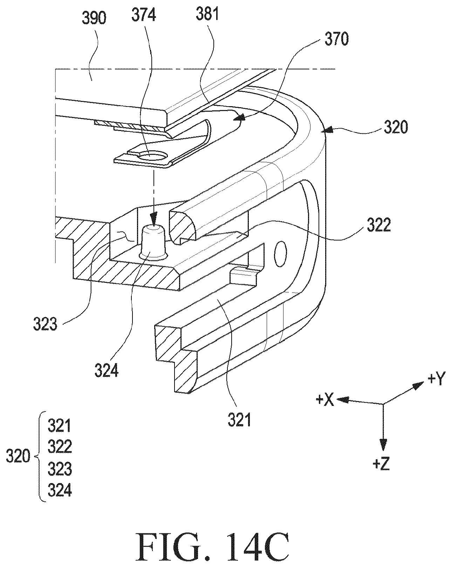

FIG. 12A is a view illustrating a state in which a socket is partially inserted into a support structure of an electronic device according to an embodiment of the disclosure. FIG. 12B is a view illustrating a state in which a socket is removed from an electronic device according to an embodiment of the disclosure. FIG. 12C is a view illustrating a state in which a handle of an electronic device is unfolded, according to an embodiment of the disclosure. FIG. 12D is a view illustrating a state in which a handle and a first adhesive member are withdrawn from a support structure according to an embodiment of the disclosure. FIG. 12E is a view illustrating a state in which a rear plate of an electronic device is separated from a support structure according to an embodiment of the disclosure. FIG. 13A is an exploded view illustrating a handle and a first adhesive member according to an embodiment of the disclosure. FIG. 13B is an exploded view illustrating a first release sheet and a second release sheet with respect to a handle, a first adhesive member, and a second adhesive member according to an embodiment of the disclosure. FIG. 13C is an exploded view illustrating a separation structure and a rear plate according to an embodiment of the disclosure. FIG. 13D is a perspective view illustrating a state in which a separation structure is coupled to a rear plate according to an embodiment of the disclosure. FIG. 14A is a view illustrating a folding structure of a handle having a separation structure according to an embodiment of the disclosure. FIG. 14B is a view illustrating a structure in which a handle in a folded state is disposed in a first space of a support structure according to an embodiment of the disclosure. FIG. 14C is a view illustrating a structure in which a handle in a folded state is disposed in a first space of a support structure according to an embodiment of the disclosure. FIG. 15 may illustrate a state in which a separation structure is coupled to a support structure for recoupling of a rear plate according to an embodiment of the disclosure.

Referring to FIG. 12A, according to an embodiment, the socket 360 may be removed or separated from the electronic device (e.g., the electronic device 101 of FIGS. 1 to 7) by being withdrawn from the first hole 321. According to an embodiment, the socket 360 may be disposed so that the first hole 321 and the second hole 322 are not visually exposed in the support structure 320 (e.g., the side portion 320b). Referring to FIG. 12B, according to an embodiment, the first hole 321 and the second hole 322 may be visually exposed to the outside of the electronic device 101 in a state in which the socket 360 is removed. According to an embodiment, in a state in which the socket 360 is removed, the handle 370 disposed in the first space 323 may be visually exposed to the outside of the electronic device 101 through the second hole 322. Referring to FIG. 12C, according to an embodiment, the third area 370c of the handle 370 illustrated in FIG. 12B may be taken out of the electronic device 101 from the first space 323 through the second hole 322. In this case, the handle 370 may be separated from the guide pin (e.g., the guide pin 324 of FIGS. 8B to 8D) by the guide slit 374a. For example, the third area 370c of the handle 370 may be taken out of the second hole 322 by a pointed tool (e.g., pen tip or tweezer) or by the user's hand. Referring to FIG. 12D, according to an embodiment, as the handle 370 is pulled, the first adhesive member 381 may be withdrawn to the outside of the electronic device 101 through the first space 323 and the second hole 322 together with the handle 370. Referring to FIG. 12E, according to an embodiment, the first adhesive member 381 disposed between the rear plate 390 and the support structure 320 may be removed from the electronic device 101 as illustrated in FIG. 12D, and the rear plate 390 may be separated from the support structure 320 by exposing the area where the first adhesive member 381 is removed from the rear plate 390 in the direction of the arrow of FIG. 12E.

FIGS. 13A to 13D are views illustrating a process in which a separation structure 305 is coupled to a rear plate 390 according to an embodiment of the disclosure.

Referring to FIG. 13A, according to an embodiment, a portion (e.g., the first area 370a of FIG. 11) of the handle 370 may be coupled to a portion of the first adhesive member 381. Referring to FIG. 13B, the separation structure 305 may further include a first release sheet 383 and a second release sheet 384 disposed on the adhesive surfaces of the first adhesive member 381 and the second adhesive member 382. Referring to FIGS. 13C and 13D, according to an embodiment, the separation structure 305 may be coupled to the rear plate 390 in a state in which the first release sheet 383 and the second release sheet 384 are coupled to the first adhesive member 381 and the second adhesive member 382. For example, when the separation structure 305 is completely coupled to the rear plate 390, the first release sheet 383 and the second release sheet 384 may be removed.

FIGS. 14A to 14C are views illustrating a process in which a handle 370 is assembled to a support structure 320 when a separation structure 305 is coupled to a rear plate 390 according to an embodiment of the disclosure. Referring to FIG. 14A, according to an embodiment, the second area 370b of the handle 370 may be folded or bent in a direction toward the inner surface (e.g., the surface in the +Z direction) of the rear plate 390, or in the direction of the arrow of FIG. 12A. Referring to FIGS. 14B and 14C, according to an embodiment, the rear plate 390 may be coupled to the support structure 320 so that the handle 370 is disposed in the first space 323 of the support structure 320 in a folded state as illustrated in FIG. 14A. Referring to FIG. 14C, according to an embodiment, the handle 370 may be disposed in the first space 323 so that the guide hole 374 is positioned around the guide pin 324 or the guide pin 324 is positioned in the guide hole 374.

FIG. 15 may illustrate a state in which a newly provided separation structure 305 is coupled to a support structure 320 to recouple a rear plate 390 to the support structure 320 in the state before separation, after separating the rear plate 390 using the separation structure 305 according to an embodiment of the disclosure. Referring to FIG. 15, according to an embodiment, the adhesive member 380 of the newly provided separation structure 305 may further include a release sheet 385 for reassembly. For example, the reassembly release sheet 385 may include at least one wing 385a and/or at least one central hole 385b. For example, the user may hold the wing 385a and position and couple the first and second coupling members 381 and 382 coupled to the reassembly release sheet 385 in the support structure 320. For example, in a state in which the first coupling member 381 and the second coupling member 382 are completely coupled to the support structure 320, the reassembly release sheet 385 may be separated or removed through the wing 385a and/or the central hole 385b.

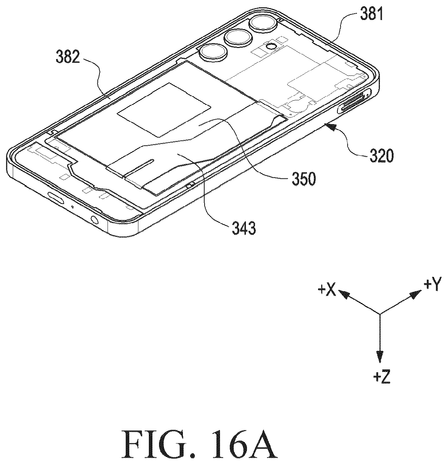

FIG. 16A is a rear perspective view illustrating an electronic device according to an embodiment of the disclosure. FIG. 16B is a partial side cross-sectional view illustrating an electronic device according to an embodiment of the disclosure.

Referring to FIG. 16A, an electronic device (e.g., the electronic device 101 of FIGS. 1 to 7) may include a housing 403 (or a support structure), a rear plate 390, a battery 350 disposed in a space between the housing 403 and the rear plate 390, a circuit board (e.g., the flexible circuit board 343), a first adhesive member 381, a second adhesive member 382 and a handle 370 for coupling or separating the rear plate 390 to/from the housing 403.

The embodiment of FIGS. 16A and 16B is an embodiment of the housing 403 in which the support structure 320 of the housing 303 and the front support structure 310 of the embodiments described above with reference to FIGS. 6 to 15 are integrated with each other. Except for the housing 403, for the components designated with identical reference numbers in the embodiments of FIGS. 16A and 16B and FIGS. 6 to 15, the descriptions made above with reference to FIGS. 6 to 15 may be similarly or identically applied, and redundant descriptions may be omitted herein. Referring to FIG. 16B, according to an embodiment, the housing 403 may further include a guide pin (e.g., the guide pin 324 of FIG. 8A and FIG. 8B).

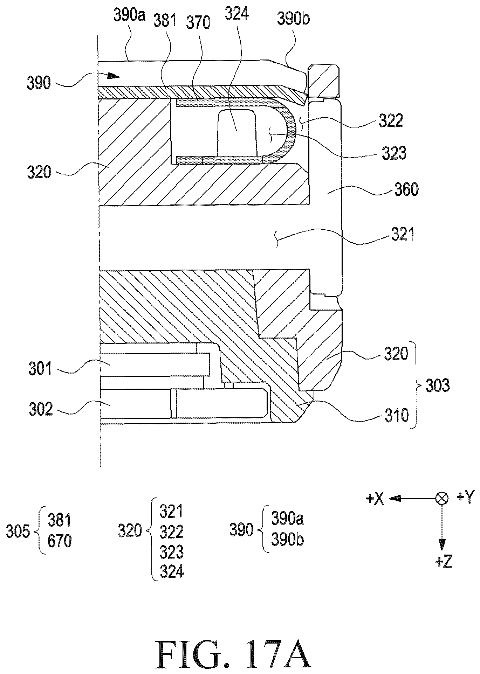

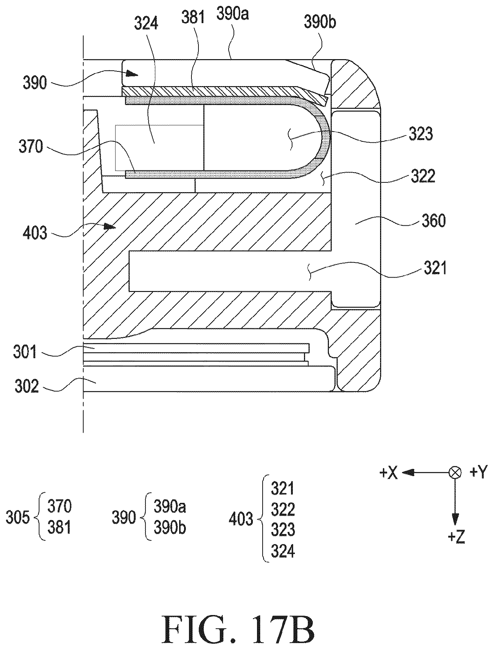

FIG. 17A is a partial side cross-sectional view illustrating an electronic device according to an embodiment of the disclosure. FIG. 17B is a partial side cross-sectional view illustrating an electronic device according to an embodiment of the disclosure.

The embodiment of FIG. 17 is an embodiment disclosing a rear plate 390 that includes a flat section 390a and a curved or diagonal section 390b disposed at the edge of the flat section 390a, unlike the rear plate 390 of the embodiments described with reference to FIGS. 6 to 15. Except for the rear plate 390, for the components designated with identical reference numbers in the embodiments of FIG. 17A and FIGS. 6 to 15, the descriptions made above with reference to FIGS. 6 to 15 may be similarly or identically applied, and redundant descriptions may be omitted herein.

The embodiment of FIG. 17B is an embodiment disclosing a rear plate 390 including a flat section 390a and a curved or diagonal section 390b disposed at the edge of the flat section 390a unlike the rear plate 390 of the embodiments described above with reference to FIGS. 6 to 15 and the housing 403 in which the support structure 320 of the housing 303 and the front support structure 310 are integrated according to the embodiments described above with reference to FIGS. 6 to 15. Except for the housing 403 and the rear plate 390, for the components designated with identical reference numbers in the embodiments of FIG. 17B and FIGS. 6 to 15, the descriptions made above with reference to FIGS. 6 to 15 may be similarly or identically applied, and redundant descriptions may be omitted herein. Referring to FIG. 17B, according to an embodiment, the housing 403 may further include a guide pin (e.g., the guide pin 324 of FIGS. 8A and 8B).

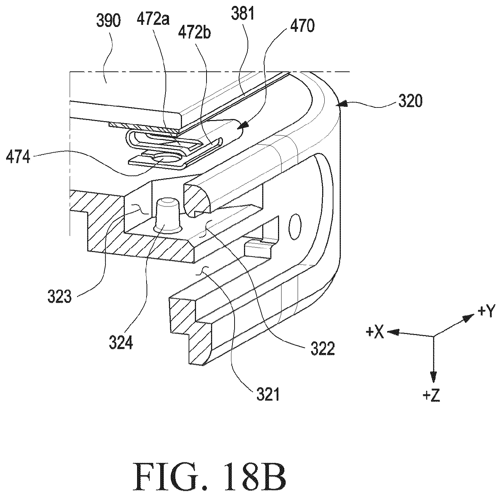

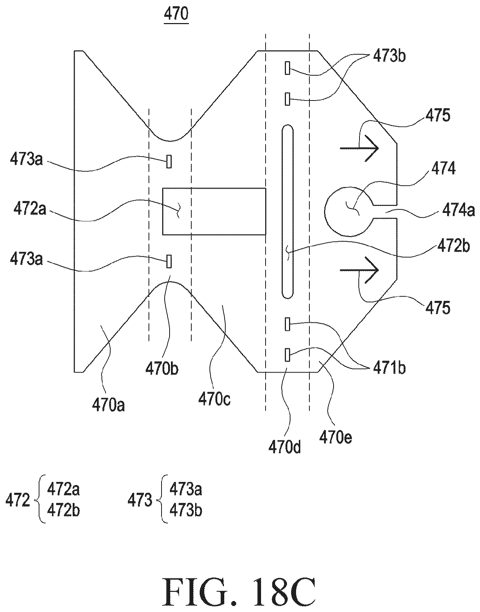

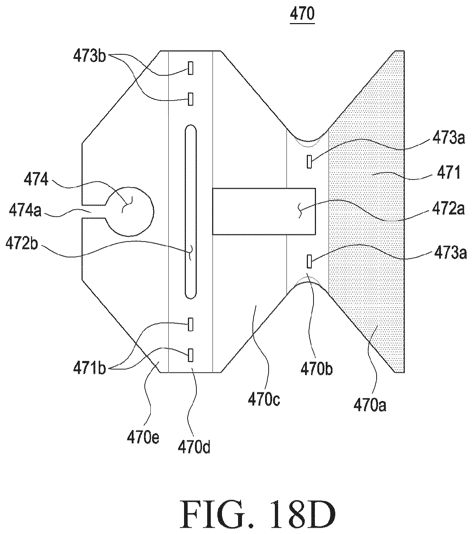

FIG. 18A is a partial side cross-sectional view illustrating an electronic device according to an embodiment of the disclosure. FIG. 18B is an exploded perspective view illustrating some components of an electronic device according to an embodiment of the disclosure. FIG. 18C is a plan view illustrating a handle according to an embodiment of the disclosure. FIG. 18D is a view illustrating the handle of FIG. 18C according to an embodiment of the disclosure as viewed from the opposite side.

The embodiment of FIGS. 18A to 18C is an embodiment disclosing a handle 470 configured to be disposed in the first space 323 in a state folded multiple times (e.g., twice), unlike the handle 370 of the embodiments described above with reference to FIGS. 6 to 15. Except for the handle 470, for the components designated with identical reference numbers in the embodiments of FIGS. 18A to 18C and FIGS. 6 to 15, the descriptions made above with reference to FIGS. 6 to 15 may be similarly or identically applied, and redundant descriptions may be omitted herein.

Referring to FIGS. 18B and 18C, according to an embodiment, the handle 470 may include a first area 470a, a second area 470b extending from the first area 470a, a third area 370c extending from the second area 470b, a fourth area 470d extending from the third area 370c, and a fifth area 470e extending from the fourth area 470d. According to an embodiment, the handle 470 may be configured so that the second area 370b and the fourth area 370d may be bent or folded so that the first area 370a, the third area 370c, and the fifth area 370e face each other at least partially or are disposed parallel to each other. For example, the handle 470 may be disposed in the first space 323 in a state folded at least once in each of the first area 370a, the third area 370c, and the fifth area 370e.

According to an embodiment, the handle 470 may further include an adhesive portion 471 disposed on one surface of the first area 470a and coupled to the first adhesive member 381. According to an embodiment, the handle 470 may further include a first bending hole 472a formed over the second area 470b to the third area 470c. For example, the first bending hole 472a may have an elongated hole shape. For example, the handle 470 may include first additional bending holes 473a formed around the first bending hole 472a in the second area 470b and having a smaller size than the first bending hole 472a. For example, the first additional bending holes 473a may be spaced apart from each other. For example, the first additional bending holes 473a may be disposed to be aligned with each other and to be aligned with the first bending hole 472a in a row.

According to an embodiment, the handle 470 may further include a second bending hole 472b formed in the fourth area 470d. For example, the second bending hole 472b may have an elongated hole shape, and for example, the length direction of the second bending hole 472b may intersect the length direction of the first bending hole 472a. For example, the handle 470 may include second additional bending holes 473b formed around the second bending hole 472b in the second area 470b and having a smaller size than the second bending hole 472b. For example, the second additional bending holes 473b may be spaced apart from each other. For example, the second additional bending holes 473b may be disposed to be aligned with each other and to be aligned with the second bending hole 472b in a row. For example, the handle 470 may be configured to fold along the bending hole 472 (e.g., the first bending hole 472a and/or the second bending hole 472b) and/or additional bending holes 473 (e.g., the first additional bending hole 473a and/or the second additional bending hole 473b). For example, the bending hole 472 and/or the additional bending holes 473 may serve to guide the handle 470 to fold in the designed shape.

According to an embodiment, the handle 470 may further include a guide hole 474 formed in the fifth area 470e. The guide hole 474 may be formed to be disposed in the guide pin 424, which it faces, in the first space 323. According to an embodiment, the handle 470 may further include a guide slit 474a connected to the guide hole 474. According to an embodiment, the guide slit 474a may pass through the guide pin 424 when the handle 470 is withdrawn to the outside of the electronic device 101 through the second hole 322. For example, the periphery of the guide slit 474a of the handle 470 may be configured to be elastically deformable when passing through the guide pin 424. According to an embodiment, the guide slit 474a may serve to separate the handle 470 connected to the guide pin 424 through the guide hole 474 from the guide pin 424.

According to an embodiment, the handle 470 may further include a guide mark 475 formed around the guide hole 474 in the fifth area 470e. For example, the guide mark 475 may be a pattern, design, or figure in the shape of an arrow to indicate the direction in which handle 470 is to be withdrawn.

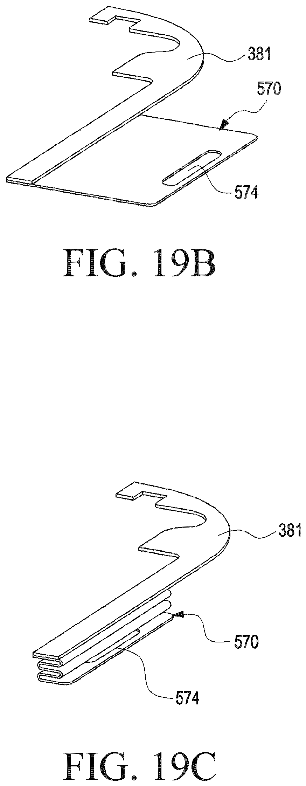

FIG. 19A is a partial side cross-sectional view illustrating an electronic device according to an embodiment of the disclosure. FIG. 19B is a view illustrating a handle in an unfolded state with a first adhesive member according to an embodiment of the disclosure. FIG. 19C is a view illustrating a handle in a folded state with a first adhesive member according to an embodiment of the disclosure.

The embodiment of FIGS. 19A to 19C is an embodiment disclosing a handle 570 configured to be disposed in the first space 323 in a folded state three or more times, unlike the handle 370 of the embodiments described above with reference to FIGS. 6 to 15. Except for the handle 570, for the components designated with identical reference numbers in the embodiments of FIGS. 19A to 19C and FIGS. 6 to 15, the descriptions made above with reference to FIGS. 6 to 15 may be similarly or identically applied, and redundant descriptions may be omitted herein. Referring to FIG. 18A, according to an embodiment, the support structure 320 may further include a guide pin (e.g., the guide pin 324 of FIGS. 8A and 8B) disposed in the first space 323.

Referring to FIGS. 19A and 19B, according to an embodiment, the handle 570 may be folded more than three times (e.g., four times), the number of times that the handle 570 is folded is not limited as long as it may be accommodated in the first space 323. According to an embodiment, the handle 570 may include a guide hole 574. For example, the guide hole 574 may function as a hole through which a tool or nail may be inserted into the handle 570 to withdraw the handle 570 disposed in the first space 323 to the outside of the electronic device 101 through the second hole 322.

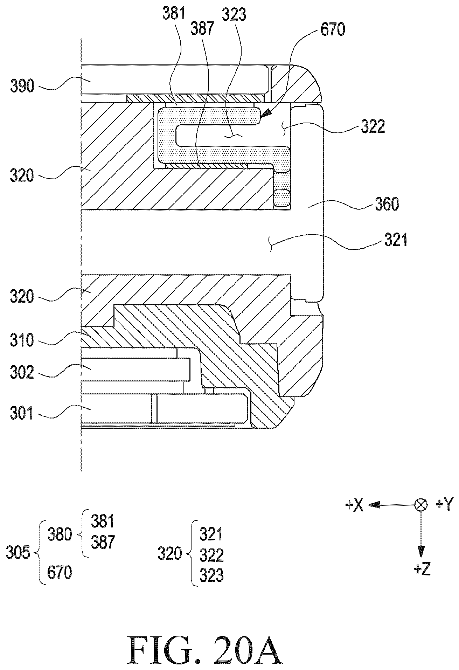

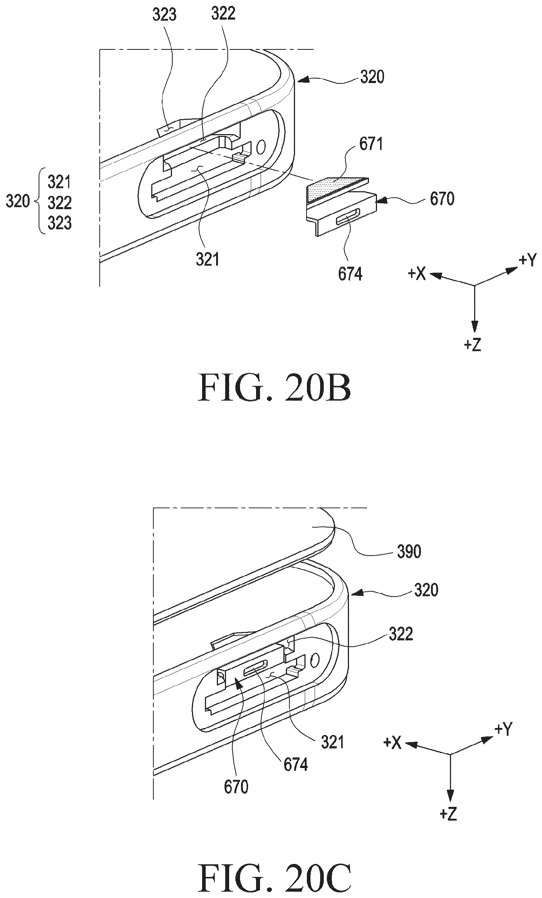

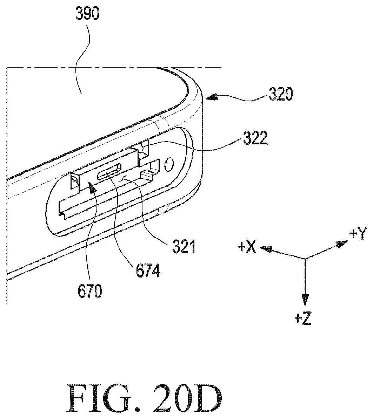

FIG. 20A is a partial side cross-sectional view illustrating an electronic device according to an embodiment of the disclosure. FIG. 20B is a view illustrating a state in which a handle is coupled to a support structure according to an embodiment of the disclosure. FIG. 20C is a view illustrating a state in which a handle is coupled to a support structure according to an embodiment of the disclosure. FIG. 20D is a view illustrating a state in which a rear plate is completely coupled to a support structure according to an embodiment of the disclosure.

The embodiment of FIGS. 20A to 20C is an embodiment disclosing a handle 670 injection-molded to have a bent shape, unlike the handle 370 of the embodiments described above with reference to FIGS. 6 to 15. Except for the handle 670, for the components designated with identical reference numbers in the embodiments of FIGS. 20A to 20C and FIGS. 6 to 15, the descriptions made above with reference to FIGS. 6 to 15 may be similarly or identically applied, and redundant descriptions may be omitted herein.

Referring to FIGS. 20A and 20B, according to an embodiment, the handle 670 may include an adhesive portion 671 and a guide hole 674 to be coupled to the first adhesive member 381. For example, the guide hole 674 may function as a hole through which a tool or nail may be inserted into the handle 670 to withdraw the handle 670 disposed in the first space 323 to the outside of the electronic device 101 through the second hole 322. Referring to FIG. 20A, according to an embodiment, an additional adhesive member 387 (e.g., a lower adhesive member) coupled to the surface surrounding the first space 323 may be further provided on the side opposite to the side coupled with the first adhesive member 381 (e.g., an upper adhesive member) of the handle 670. For example, the handle 670 may be formed through injection molding and may be formed of a material having flexibility and/or elasticity.

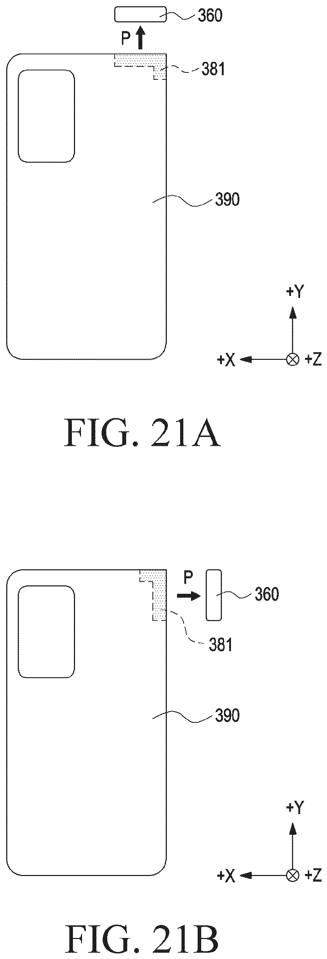

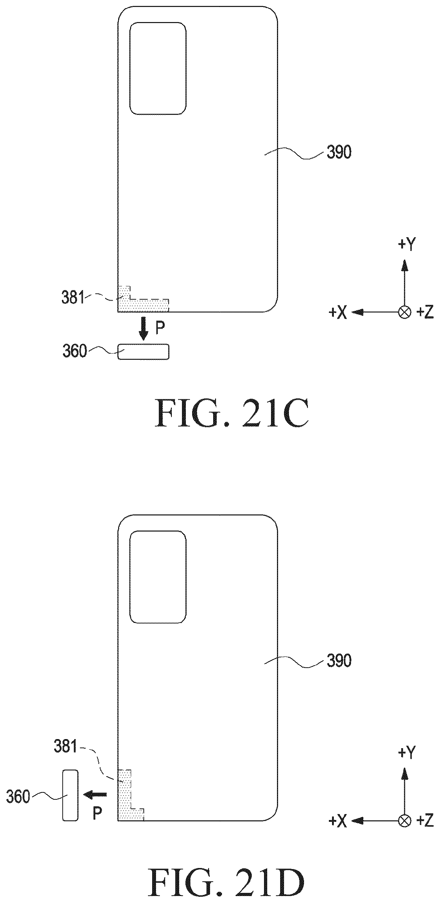

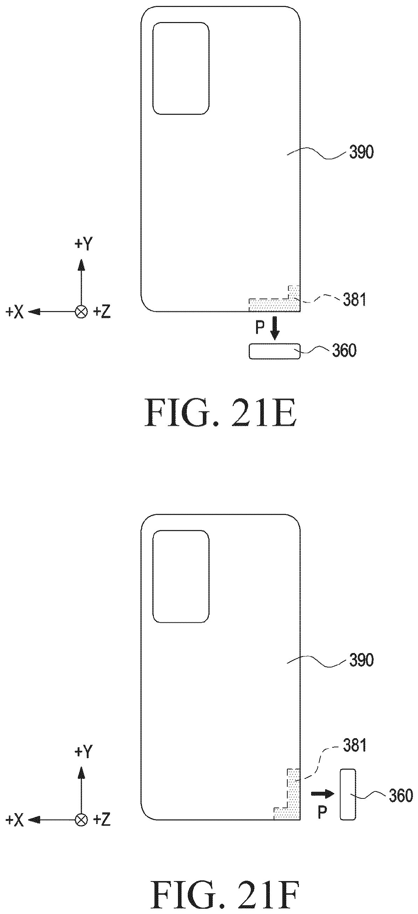

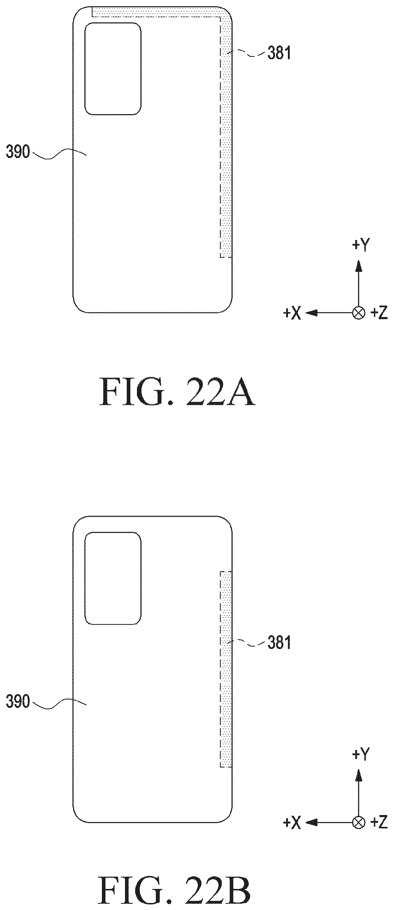

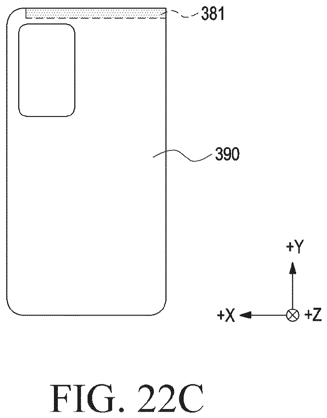

FIG. 21A is a rear view illustrating a separation direction of a socket and an arrangement of a first adhesive member with respect to a rear plate according to an embodiment of the disclosure. FIG. 21B is a rear view illustrating a separation direction of a socket and an arrangement of a first adhesive member with respect to a rear plate according to an embodiment of the disclosure. FIG. 21C is a rear view illustrating a separation direction of a socket and an arrangement of a first adhesive member with respect to a rear plate according to an embodiment of the disclosure. FIG. 21D is a rear view illustrating a separation direction of a socket and an arrangement of a first adhesive member with respect to a rear plate according to an embodiment of the disclosure. FIG. 21E is a rear view illustrating a separation direction of a socket and an arrangement of a first adhesive member with respect to a rear plate according to an embodiment of the disclosure. FIG. 21F is a rear view illustrating a separation direction of a socket and an arrangement of a first adhesive member with respect to a rear plate according to an embodiment of the disclosure. FIG. 22A is a rear view illustrating an arrangement of a first adhesive member with respect to a rear plate according to an embodiment of the disclosure. FIG. 22B is a rear view illustrating an arrangement of a first adhesive member with respect to a rear plate according to an embodiment of the disclosure. FIG. 22C is a rear view illustrating an arrangement of a first adhesive member with respect to a rear plate according to an embodiment of the disclosure.

The embodiments of FIGS. 21A to 21E are embodiments regarding the arrangement of the first adhesive member 381 for the rear plate 390 according to the position and separation direction P of the socket 360 of the embodiments described with reference to FIGS. 6 to 20B.

Referring to FIG. 21A, according to an embodiment, the socket 360 may be disposed at the upper end (e.g., the end in the +Y direction) of the rear plate 390, and the separation direction P of the socket 360 may be the direction of the upper end (e.g., the end in the +Y direction) of the rear plate 390. For example, the first adhesive member 381 may be disposed at the upper end (e.g., the end in the +Y direction) of the rear plate 390 adjacent to the accommodation space of the socket 360 and the side end (e.g., the end in the X-direction) of the plate 390.

Referring to FIG. 21B, according to an embodiment, the socket 360 may be disposed at the side end (e.g., the end in the -X direction) of the rear plate 390, and the separation direction P of the socket 360 may be the direction of the side end (e.g., the end in the -X direction) of the rear plate 390. For example, the first adhesive member 381 may be disposed at the side end (e.g., the end in the -X direction) of the rear plate 390 adjacent to the accommodation space of the socket 360 and the upper end (e.g., the end in the +Y direction) extending therefrom.

Referring to FIG. 21C, according to an embodiment, the socket 360 may be disposed at the lower end (e.g., the end in the -Y direction) of the rear plate 390, and the separation direction P of the socket 360 may be the direction of the lower end (e.g., the end in the -Y direction) of the rear plate 390. For example, the first adhesive member 381 may be disposed at the lower end (e.g., the end in the -Y direction) of the rear plate 390 adjacent to the accommodation space of the socket 360 and the side end (e.g., the end in the +X direction) of the plate 390 extending therefrom.

Referring to FIG. 21D, according to an embodiment, the socket 360 may be disposed at the side end (e.g., the end in the +X direction) of the rear plate 390, and the separation direction P of the socket 360 may be the direction of the side end (e.g., the end in the +X direction) of the rear plate 390. For example, the first adhesive member 381 may be disposed at the side end (e.g., the end in the +X direction) of the rear plate 390 adjacent to the accommodation space of the socket 360 and the lower end (e.g., the end in the -Y direction) extending therefrom.

Referring to FIG. 21E, according to an embodiment, the socket 360 may be disposed at the lower end (e.g., the end in the -Y direction) of the rear plate 390, and the separation direction P of the socket 360 may be the direction of the lower end (e.g., the end in the -Y direction) of the rear plate 390. For example, the first adhesive member 381 may be disposed at the lower end (e.g., the end in the -Y direction) of the rear plate 390 adjacent to the accommodation space of the socket 360 and the side end (e.g., the end in the -X direction) of the plate 390 extending therefrom.

Referring to FIG. 21B, according to an embodiment, the socket 360 may be disposed at the side end (e.g., the end in the -X direction) of the rear plate 390, and the separation direction P of the socket 360 may be the direction of the side end (e.g., the end in the -X direction) of the rear plate 390. For example, the first adhesive member 381 may be disposed at the side end (e.g., the end in the -X direction) of the rear plate 390 adjacent to the accommodation space of the socket 360 and the lower end (e.g., the end in the -Y direction) extending therefrom.

Referring to FIG. 22A, according to one embodiment, the first adhesive member 381 may be disposed at a plurality of ends among the ends of the rear plate 390, e.g., at the upper end (e.g., the end in the +Y direction) and the side end (e.g., the end in the -X direction) extending therefrom. Referring to FIG. 22B, according to an embodiment, the first adhesive member 381 may be disposed only at one end of the rear plate 390, e.g., at the side end (e.g., the end in the -X direction). Referring to FIG. 22C, according to an embodiment, the first adhesive member 381 may be disposed at only one end of the rear plate 390, e.g., at the upper end (e.g., the end portion in the +Y direction).

Aspects of the disclosure are to address at least the above-described problems and/or disadvantages, and to provide at least the advantages described below. However, the objects of the disclosure are not limited to the foregoing objects but rather may be expanded in various manners without departing from the spirit and scope of the disclosure. The effects that may be obtained from this disclosure are not limited to the effects mentioned above, and various effects that may be directly or indirectly identified through the disclosure may be provided.

It is apparent to one of ordinary skill in the art that the separation structure and the electronic device including the speaker assembly of the disclosure as described above are not limited to the above-described embodiments and those shown in the drawings, and various changes, modifications, or alterations may be made thereto without departing from the scope of the disclosure.

While the disclosure has been described and shown in connection with an embodiment, it should be appreciated that an embodiment is intended as limiting the disclosure but as illustrative. It will be apparent to one of ordinary skill in the art that various changes may be made in form and detail without departing from the overall scope of the disclosure, including the appended claims and their equivalents.

According to an embodiment, an electronic device may be provided. The electronic device 101 may comprise a housing 303 including a support structure 220, 320 and a rear plate 290, 390 disposed to face at least a portion of the support structure with a first gap interposed therebetween, the support structure including a first hole 321 and a second hole 322 formed around the first hole and connected to a first space 323 within the housing, a socket 360 configured to be disposed to close the first hole and the second hole and at least partially accommodated in the housing, an adhesive member 380 coupled to the rear plate and the support structure, and including a first adhesive member 381 and a second adhesive member 382 disposed in different sections of the first gap, and a handle 370 coupled to the first adhesive member and accommodated in the first space in a folded state where the handle 370 is folded at least once.

According to an embodiment, the handle may be disposed in the first space such that a portion of the handle is visually exposed to an outside of the electronic device through the second hole in a state where the socket is removed.

According to an embodiment, the first adhesive member may include a first coupling structure 3811, and the second adhesive member includes a second coupling structure 3821 configured to engage with the first coupling structure and spaced by a specified distance apart from the first coupling structure.

According to an embodiment, when the handle is drawn out of the electronic device through the second hole, the first adhesive member may be configured to be drawn out of the electronic device together with the handle through the first space and the second hole.

According to an embodiment, when the first adhesive member is drawn out of the electronic device, the second adhesive member may be configured to be separated from the first adhesive member and maintained in the first gap.

According to an embodiment, the first adhesive member may be formed of a material with greater ductility and elasticity than the second adhesive member.

According to an embodiment, the first adhesive member may be disposed in a first section, extending from a section connected to the first space, of the first gap, and the second adhesive member may be disposed in a second section around the first section.

According to an embodiment, the support structure may further include a guide pin 324 protruding from a portion of a surface of the support structure surrounding the first space into the first space, and the handle may include at least one guide hole 374, 474 through which the guide pin passes.

According to an embodiment, one end of the handle may be at least partially coupled to the first adhesive member, and the handle may include guide slits 374a, 474a, which are connected to the guide hole, at an opposite end of the handle.

According to an embodiment, when the handle is drawn out of the electronic device through the second hole, the guide slit may be configured to pass through the guide pin so that the guide hole is separated from the guide pin.

According to an embodiment, the handle may include a first area coupled to the first adhesive member, and at least one bending hole 372, 472 disposed between the first area and the guide hole.

According to an embodiment, the handle may be disposed in the first space in a folded state along the at least one bending hole.

According to an embodiment, when the rear plate is viewed in a direction in which the first space is located, the first adhesive member and the handle may at least partially overlap.

According to an embodiment, the socket may be configured to allow at least one storage medium to be disposed on the socket.

According to an embodiment, the support structure may include a plate portion 320a disposed to face the rear plate and a side portion 320b disposed at an edge of the plate portion, and the first hole and the second hole may be formed at the side portion and the first space may be formed in the plate portion.

According to an embodiment, an electronic device may be provided. The electronic device 101 may comprise a housing 303 including a support structure 220, 320 and a rear plate 290, 390 disposed to face at least a portion of the support structure with a first gap interposed therebetween, the support structure including a first hole 321 and a second hole 322 formed around the first hole and connected to a first space 323 within the housing, an adhesive member 380 coupled to the rear plate and the support structure, and including a first adhesive member 381 and a second adhesive member 382 disposed in different sections of the first gap, and a handle 370 coupled to the first adhesive member and accommodated in the first space in a folded state where the handle 370 is folded at least once. The first adhesive member may include a first coupling structure 3811, and the second adhesive member includes a second coupling structure 3821 configured to engage with the first coupling structure and spaced by a specified distance apart from the first coupling structure.

According to an embodiment, the electronic device may further comprise a socket 360 disposed to close the first hole and the second hole and to be at least partially accommodated in the housing, and formed to allow at least one storage medium to be seated therein.

According to an embodiment, the handle may be disposed in the first space such that a portion of the handle is visually exposed to an outside of the electronic device through the second hole in a state where the socket is removed.

According to an embodiment, when the handle is drawn out of the electronic device through the second hole, the first adhesive member may be configured to be drawn out of the electronic device together with the handle through the first space and the second hole, and the second adhesive member may be configured to be separated from the first adhesive member and maintained in the first gap.

According to an embodiment, the support structure may further include a guide pin 324 protruding from a portion of a surface of the support structure surrounding the first space into the first space, and the handle may include at least one guide hole 374, 474 through which the guide pin passes.

The electronic device according to an embodiment of the disclosure may be one of various types of devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a housing (303) including a support structure (220; 320) and a rear plate (290; 390) disposed to face at least a portion of the support structure with a first gap interposed therebetween, the support structure including a first hole (321) and a second hole (322) formed around the first hole and connected to a first space (323) within the housing;
a socket (360) configured to be disposed to close the first hole and the second hole and at least partially accommodated in the housing;
an adhesive member (380) coupled to the rear plate and the support structure, and including a first adhesive member (381) and a second adhesive member (382) disposed in different sections of the first gap; and
a handle (370) coupled to the first adhesive member and accommodated in the first space in a folded state where the handle (370) is folded at least once.

2. The electronic device of claim 1, wherein the handle is disposed in the first space such that a portion of the handle is visually exposed to an outside of the electronic device through the second hole in a state where the socket is removed.

3. The electronic device of claim 1 or 2, wherein the first adhesive member includes a first coupling structure (3811), and the second adhesive member includes a second coupling structure (3821) configured to engage with the first coupling structure and spaced by a specified distance apart from the first coupling structure.

4. The electronic device of any one of claims 1 to 3, wherein when the handle is drawn out of the electronic device through the second hole, the first adhesive member is configured to be drawn out of the electronic device together with the handle through the first space and the second hole.

5. The electronic device of any one of claims 1 to 4, wherein when the first adhesive member is drawn out of the electronic device, the second adhesive member is configured to be separated from the first adhesive member and maintained in the first gap.

6. The electronic device of any one of claims 1 to 5, wherein the first adhesive member is formed of a material with greater ductility and elasticity than the second adhesive member.

7. The electronic device of any one of claims 1 to 6, wherein the first adhesive member is disposed in a first section, extending from a section connected to the first space, of the first gap, and the second adhesive member is disposed in a second section around the first section.

8. The electronic device of any one of claims 1 to 7, wherein the support structure further includes a guide pin (324) protruding from a portion of a surface of the support structure surrounding the first space into the first space, and the handle includes at least one guide hole (374; 474) through which the guide pin passes.

9. The electronic device of claim 8, wherein one end of the handle is at least partially coupled to the first adhesive member, and the handle includes guide slits (374a, 474a), which are connected to the guide hole, at an opposite end of the handle.

10. The electronic device of claim 8 or 9, wherein when the handle is drawn out of the electronic device through the second hole, the guide slit is configured to pass through the guide pin so that the guide hole is separated from the guide pin.

11. The electronic device of any one of claims 8 to 10, wherein the handle includes a first area coupled to the first adhesive member, and at least one bending hole (372; 472) disposed between the first area and the guide hole.

12. The electronic device of claim 11, wherein the handle is disposed in the first space in a folded state along the at least one bending hole.

13. The electronic device of any one of claims 1 to 12, wherein when the rear plate is viewed in a direction in which the first space is located, the first adhesive member and the handle at least partially overlap.

14. The electronic device of any one of claims 1 to 13, wherein the socket is configured to allow at least one storage medium to be disposed on the socket.

15. The electronic device of any one of claims 1 to 14, wherein the support structure includes a plate portion (320a) disposed to face the rear plate and a side portion (320b) disposed at an edge of the plate portion, and wherein the first hole and the second hole are formed at the side portion and the first space is formed in the plate portion.
